# EUROPEAN PATENT SPECIFICATION

(11) **EP 4 144 017 B1**
(45) Date of publication and mention of the grant of the patent: **04.03.2026**
(21) Application number: 20933725.2
(22) Date of filing: 30.04.2020
(51) Int. Cl.: H04L 5/00

(54) **MULTIPLEXING SIDELINK DATA FOR COMMUNICATION**
MULTIPLEX-SIDELINK-DATEN FÜR KOMMUNIKATION
MULTIPLEXAGE DE DONNÉES DE LIAISON LATÉRALE POUR LA COMMUNICATION

(43) Date of publication of application: 08.03.2023
(73) Proprietor: QUALCOMM INCORPORATED, San Diego, California 92121-1714 (US)
(72) Inventor: LIU, Chih-Hao, San Diego, California 92121-1714 (US); SUN, Jing, San Diego, California 92121-1714 (US); ZHANG, Xiaoxia, San Diego, California 92121-1714 (US); XUE, Yisheng, San Diego, California 92121-1714 (US); XU, Changlong, San Diego, California 92121-1714 (US); OZTURK, Ozcan, San Diego, California 92121-1714 (US)
(74) Representative: Jaeger, Michael David
(86) International application number: PCT/CN2020/087997
(87) International publication number: WO 2021/217549

(56) References cited:
- CN-A- 108 391 315
- US-A1- 2015 304 995
- HUAWEI ET AL: "Sidelink physical layer structure for NR V2X", vol. RAN WG1, no. Reno, USA; 20191118 - 20191122, 9 November 2019 (2019-11-09), XP051823064, Retrieved from the Internet <URL:https://ftp.3gpp.org/tsg_ran/WG1_RL1/TSGR1_99/Docs/R1-1911882.zip R1-1911882.docx> [retrieved on 20191109]
- HUAWEI ET AL: "Sidelink CSI", vol. RAN WG1, no. Prague, Czech Republic; 20190826 - 20190830, 17 August 2019 (2019-08-17), XP051766045, Retrieved from the Internet <URL:http://www.3gpp.org/ftp/tsg_ran/WG1_RL1/TSGR1_98/Docs/R1-1909438.zip> [retrieved on 20190817]
- HUAWEI ET AL: "Sidelink reference signal design for NR V2X", vol. RAN WG1, no. Reno, USA; 20190513 - 20190517, 13 May 2019 (2019-05-13), XP051727466, Retrieved from the Internet <URL:http://www.3gpp.org/ftp/Meetings%5F3GPP%5FSYNC/RAN1/Docs/R1%2D1906009%2Ezip> [retrieved on 20190513]
- NOKIA; NOKIA SHANGHAI BELL: "Discussion of physical layer procedures for sidelink", 3GPP DRAFT; R1-1910517 SIDELINK PROCEDURES, vol. RAN WG1, 8 October 2019 (2019-10-08), Chongqing, China, pages 1 - 8, XP051789322
- INTEL CORPORATION: "Sidelink Physical Structure for NR V2X Communication", 3GPP DRAFT; R1-1906794 INTEL - EV2X_SL_L1, vol. RAN WG1, 4 May 2019 (2019-05-04), Reno, USA, pages 1 - 20, XP051708830

## Description

### TECHNICAL FIELD

The technology discussed below relates generally to wireless communication systems, and more particularly, to wireless sidelink communication.

### BACKGROUND

3rd Generation Partnership Project (3GPP) New Radio (NR) supports operation in unlicensed spectrum, intelligent transportation systems, Industrial Internet of Things, non-terrestrial networks, and vehicle-to-everything (V2X) application layer services, among other services and features. NR-based V2X builds on previous iterations of Long Term Evolution (LTE)-V2X, and provides advanced features, primarily in the area of low latency use cases. Enhanced NR system and new NR sidelinks have been introduced for V2X to meet certain requirements, such as a need to have a flexible design to support services with low latency and high reliability requirements, along with support for higher capacity and better coverage.

As the demand for mobile broadband access and sidelink communications continues to increase, research and development continue to advance wireless communication technologies not only to meet the growing demand for mobile broadband access, but to advance and enhance mobile communications. Accordingly, the present disclosure addresses technologies and techniques to improve sidelink communications.

R1-1911882, "Sidelink physical layer structure for NR V2X", discusses issues such as resource pool, sidelink bandwidth part, sidelink channel (PSCCH/PSSCH/PSFCH) design, PSCCH/PSSCH/PSFCH multiplexing, and reference signals.

R1-1909438, "Sidelink CSI", discusses the details of SL CSI RS, SL CQI/RI contents, use of PSSCH for CSI report, and procedures of CSI reporting.

R1-1906009, "Sidelink reference signal design for NR V2X", discusses sidelink reference signal design.

### BRIEF SUMMARY

The invention is defined by the appended claims.

### BRIEF DESCRIPTION OF THE DRAWINGS

FIG. 1 is a schematic illustration of a wireless communication system;
FIG. 2 is a conceptual illustration of an example of a radio access network;
FIG. 3 is a block diagram illustrating a wireless communication system supporting multiple-input multiple-output (MIMO) communication;
FIG. 4 is a schematic illustration of an organization of wireless resources in an air interface utilizing orthogonal frequency divisional multiplexing (OFDM);
FIG. 5 is an illustration of a Physical Sidelink Broadcast Channel (PSBCH) synchronization signal block (SSB);
FIG. 6 is an illustration of NR sidelink transmission, with multiplexing of physical sidelink control channel (PSCCH), physical sidelink shared channel (PSSCH) and associated physical sidelink feedback channel (PSFCH) in both the time and frequency domains;
FIG. 7 is an illustration of association of resource blocks in subchannels of physical sidelink shared channel (PSSCH) and physical sidelink feedback channel (PSFCH);
FIG. 8 is an illustration of physical sidelink shared channel (PSSCH) communication utilizing channel state information (CSI) triggering;
FIG. 9 is an illustration of a resource block for physical sidelink shared channel (PSSCH) and physical sidelink shared channel (PSSCH) utilizing physical sidelink feedback channel (PSFCH);
FIG. 10 is an illustration of a resource block for physical sidelink shared channel (PSSCH) and physical sidelink shared channel (PSSCH) without utilizing physical sidelink feedback channel (PSFCH);
FIG. 11 is an illustration of a configuration for sidelink shared channel (PSSCH) collision handling under one example;
FIG. 12 is an illustration of a configuration for sidelink shared channel (PSSCH) collision handling under another example;
FIG. 13 is a block diagram illustrating an example of a hardware implementation for a UE employing a processing system in accordance with some aspects of the present disclosure;
FIG. 14 is a block diagram illustrating sidelink baseband processing;
FIG. 15 is a process flow for sidelink data communication; and
FIG. 16 is a process flow for sidelink data communication for the example of FIG. 15 with and without PSFCH.

### DETAILED DESCRIPTION

The detailed description set forth below in connection with the appended drawings is intended as a description of various configurations and is not intended to represent the only configurations in which the concepts described herein may be practiced. The detailed description includes specific details for the purpose of providing a thorough understanding of various concepts. However, it will be apparent to those skilled in the art that these concepts may be practiced without these specific details. In some instances, well known structures and components are shown in block diagram form in order to avoid obscuring such concepts.

While aspects are described in this application by illustration to some examples, those skilled in the art will understand that additional implementations and use cases may come about in many different arrangements and scenarios. Aspects described herein may be implemented across many differing platform types, devices, systems, shapes, sizes, packaging arrangements. For example, aspects and/or uses may come about via integrated chip aspects and other non-module-component based devices (e.g., end-user devices, vehicles, communication devices, computing devices, industrial equipment, retail/purchasing devices, medical devices, AI-enabled devices, etc.). While some examples may or may not be specifically directed to use cases or applications, a wide assortment of applicability of described aspects may occur. Implementations may range a spectrum from chip-level or modular components to non-modular, non-chip-level implementations and further to aggregate, distributed, or OEM devices or systems incorporating one or more aspects of the disclosure. In some practical settings, devices incorporating described aspects and features may also necessarily include additional components and features for implementation and practice of claimed and described aspects. For example, transmission and reception of wireless signals necessarily includes a number of components for analog and digital purposes (e.g., hardware components including antenna, RF-chains, power amplifiers, modulators, buffer, processor(s), interleaver, adders/summers, etc.). It is intended that aspects described herein may be practiced in a wide variety of devices, chip-level components, systems, distributed arrangements, end-user devices, etc. of varying sizes, shapes and constitution.

A Self Organizing Network (SON) refers to mobile network automation and minimization of human intervention in cellular/wireless network management. SON's objectives include: 1) bringing intelligence and autonomous adaptability into cellular networks; 2) reducing capital and operation expenditures; and 3) enhancing network performances in terms of network capacity, coverage, offered service/experience, etc. SON aims at improving spectral efficiency, simplifying management, and reducing the operation costs of next generation radio access networks (RANs).

Drive tests are used for collecting data of mobile networks. This data is needed for the configuration and maintenance of mobile networks, e.g., with respect to network capacity optimization, network coverage optimization, UE mobility optimization, and quality of service (QoS) verification. In order to execute drive tests, human effort is required. However, these measurements cover only a small piece of time and location of the network. Minimization of Drive Tests (MDT) enables operators to utilize UEs to collect radio measurements and associated location information, in order to assess network performance while reducing the operation expenditures associated with traditional drive tests. As such, MDT allows for standard UEs to be used for collecting/recording measurements and reporting the measurements to the operators while traditional drive tests make use of high developed measurement equipment.

In 3GPP NR, different types of UE reporting for measurements and events were developed with respect to SON and MDT.For example, the UE reporting of measurements and events may be directed to other scenarios such as Unified Access Control (UAC), which may enhance a user experience. UAC refers to a mechanism for regulating a UE's access to a network. For example, access control may be exercised by the network to reject the UE access or assign different types of priority to different types of user applications. Accordingly, aspects of the present disclosure relate to procedures, content, and triggers for UE reporting of UAC-related events.

In an aspect, operations related to a UE reporting control measurements (e.g., UAC measurements) to a network will be described. For example, the UE receives a configuration from the network indicating one or more measurements to record. The UE then performs an attempt to access the network and records the one or more measurements associated with the attempt. The UE reports, to the network, an availability of the one or more measurements after the attempt is performed. Thereafter, the UE receives a request for at least one measurement of the one or more measurements from the network and reports the at least one measurement to the network if the request for the at least one measurement is received.

In another aspect, operations related to a network device receiving a report of control measurements (e.g., UAC measurements) from a UE will be described. For example, the network sends a configuration to the UE indicating one or more measurements to record. The network device then receives, from the UE, a report indicating an availability of the one or more measurements recorded by the UE in association with an attempt to access the network device. The network device determines to receive at least one measurement of the one or more measurements, and sends, to the UE, a request to receive the at least one measurement. Thereafter, the network device receives, from the UE, a report including the at least one measurement in response to the request.

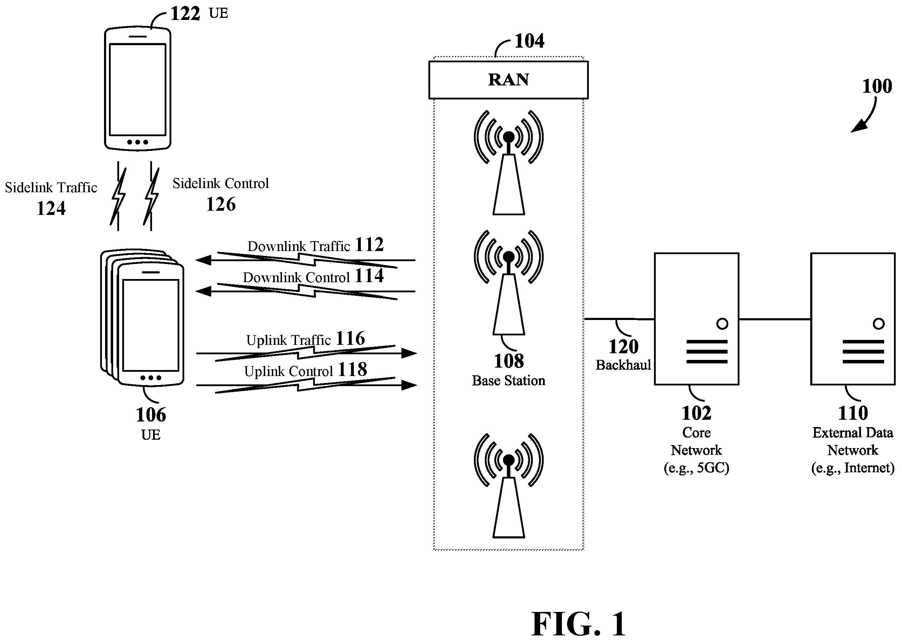

The various concepts presented throughout this disclosure may be implemented across a broad variety of telecommunication systems, network architectures, and communication standards. Referring now to FIG. 1, as an illustrative example without limitation, various aspects of the present disclosure are illustrated with reference to a wireless communication system 100. The wireless communication system 100 includes three interacting domains: a core network 102, a radio access network (RAN) 104, and a user equipment (UE) 106. By virtue of the wireless communication system 100, the UE 106 may be enabled to carry out data communication with an external data network 110, such as (but not limited to) the Internet.

The RAN 104 may implement any suitable wireless communication technology or technologies to provide radio access to the UE 106. As one example, the RAN 104 may operate according to 3^{rd} Generation Partnership Project (3GPP) New Radio (NR) specifications, often referred to as 5G. As another example, the RAN 104 may operate under a hybrid of 5G NR and Evolved Universal Terrestrial Radio Access Network (eUTRAN) standards, often referred to as LTE. The 3GPP refers to this hybrid RAN as a next-generation RAN, or NG-RAN. Of course, many other examples may be utilized within the scope of the present disclosure.

As illustrated, the RAN 104 includes a plurality of base stations 108. Broadly, a base station is a network element in a radio access network responsible for radio transmission and reception in one or more cells to or from a UE. In different technologies, standards, or contexts, a base station may variously be referred to by those skilled in the art as a base transceiver station (BTS), a radio base station, a radio transceiver, a transceiver function, a basic service set (BSS), an extended service set (ESS), an access point (AP), a Node B (NB), an eNode B (eNB), a gNode B (gNB), or some other suitable terminology.

The radio access network 104 is further illustrated supporting wireless communication for multiple mobile apparatuses. A mobile apparatus may be referred to as user equipment (UE) in 3GPP standards, but may also be referred to by those skilled in the art as a mobile station (MS), a subscriber station, a mobile unit, a subscriber unit, a wireless unit, a remote unit, a mobile device, a wireless device, a wireless communications device, a remote device, a mobile subscriber station, an access terminal (AT), a mobile terminal, a wireless terminal, a remote terminal, a handset, a terminal, a user agent, a mobile client, a client, or some other suitable terminology. A UE may be an apparatus that provides a user with access to network services.

Within the present document, a "mobile" apparatus need not necessarily have a capability to move, and may be stationary. The term mobile apparatus or mobile device broadly refers to a diverse array of devices and technologies. UEs may include a number of hardware structural components sized, shaped, and arranged to help in communication; such components can include antennas, antenna arrays, RF chains, amplifiers, one or more processors, etc. electrically coupled to each other. For example, some non-limiting examples of a mobile apparatus include a mobile, a cellular (cell) phone, a smart phone, a session initiation protocol (SIP) phone, a laptop, a personal computer (PC), a notebook, a netbook, a smartbook, a tablet, a personal digital assistant (PDA), and a broad array of embedded systems, e.g., corresponding to an "Internet of things" (IoT). A mobile apparatus may additionally be an automotive or other transportation vehicle, a remote sensor or actuator, a robot or robotics device, a satellite radio, a global positioning system (GPS) device, an object tracking device, a drone, a multi-copter, a quad-copter, a remote control device, a consumer and/or wearable device, such as eyewear, a wearable camera, a virtual reality device, a smart watch, a health or fitness tracker, a digital audio player (e.g., MP3 player), a camera, a game console, etc. A mobile apparatus may additionally be a digital home or smart home device such as a home audio, video, and/or multimedia device, an appliance, a vending machine, intelligent lighting, a home security system, a smart meter, etc. A mobile apparatus may additionally be a smart energy device, a security device, a solar panel or solar array, a municipal infrastructure device controlling electric power (e.g., a smart grid), lighting, water, etc.; an industrial automation and enterprise device; a logistics controller; agricultural equipment; military defense equipment, vehicles, aircraft, ships, and weaponry, etc. Still further, a mobile apparatus may provide for connected medicine or telemedicine support, e.g., health care at a distance. Telehealth devices may include telehealth monitoring devices and telehealth administration devices, whose communication may be given preferential treatment or prioritized access over other types of information, e.g., in terms of prioritized access for transport of critical service data, and/or relevant QoS for transport of critical service data.

Wireless communication between a RAN 104 and a UE 106 may be described as utilizing an air interface. Transmissions over the air interface from a base station (e.g., base station 108) to one or more UEs (e.g., UE 106) may be referred to as downlink (DL) transmission. In accordance with certain aspects of the present disclosure, the term downlink may refer to a point-to-multipoint transmission originating at a scheduling entity (described further below; e.g., base station 108). Another way to describe this scheme may be to use the term broadcast channel multiplexing. Transmissions from a UE (e.g., UE 106) to a base station (e.g., base station 108) may be referred to as uplink (UL) transmissions. In accordance with further aspects of the present disclosure, the term uplink may refer to a point-to-point transmission originating at a scheduled entity (described further below; e.g., UE 106).

In some examples, access to the air interface may be scheduled, wherein a scheduling entity (e.g., a base station 108) allocates resources for communication among some or all devices and equipment within its service area or cell. Within the present disclosure, as discussed further below, the scheduling entity may be responsible for scheduling, assigning, reconfiguring, and releasing resources for one or more scheduled entities. That is, for scheduled communication, UEs 106, which may be scheduled entities, may utilize resources allocated by the base station/scheduling entity 108.

Base stations 108 are not the only entities that may function as scheduling entities. That is, in some examples, a UE may function as a scheduling entity, scheduling resources for one or more scheduled entities (e.g., one or more other UEs).

As illustrated in FIG. 1, a base station 108 may broadcast downlink traffic 112 to one or more UEs 106. Broadly, the base station 108 is a node or device responsible for scheduling traffic in a wireless communication network, including the downlink traffic 112 and, in some examples, uplink traffic 116 from one or more UEs 106 to the base station 108. On the other hand, the UE 106 is a node or device that receives downlink control information 114, including but not limited to scheduling information (e.g., a grant), synchronization or timing information, or other control information from another entity in the wireless communication network such as the base station 108.

In general, base stations 108 may include a backhaul interface for communication with a backhaul portion 120 of the wireless communication system. The backhaul 120 may provide a link between a base station 108 and the core network 102. Further, in some examples, a backhaul network may provide interconnection between the respective base stations 108. Various types of backhaul interfaces may be employed, such as a direct physical connection, a virtual network, or the like using any suitable transport network.

The core network 102 may be a part of the wireless communication system 100, and may be independent of the radio access technology used in the RAN 104. In some examples, the core network 102 may be configured according to 5G standards (e.g., 5GC). In other examples, the core network 102 may be configured according to a 4G evolved packet core (EPC), or any other suitable standard or configuration.

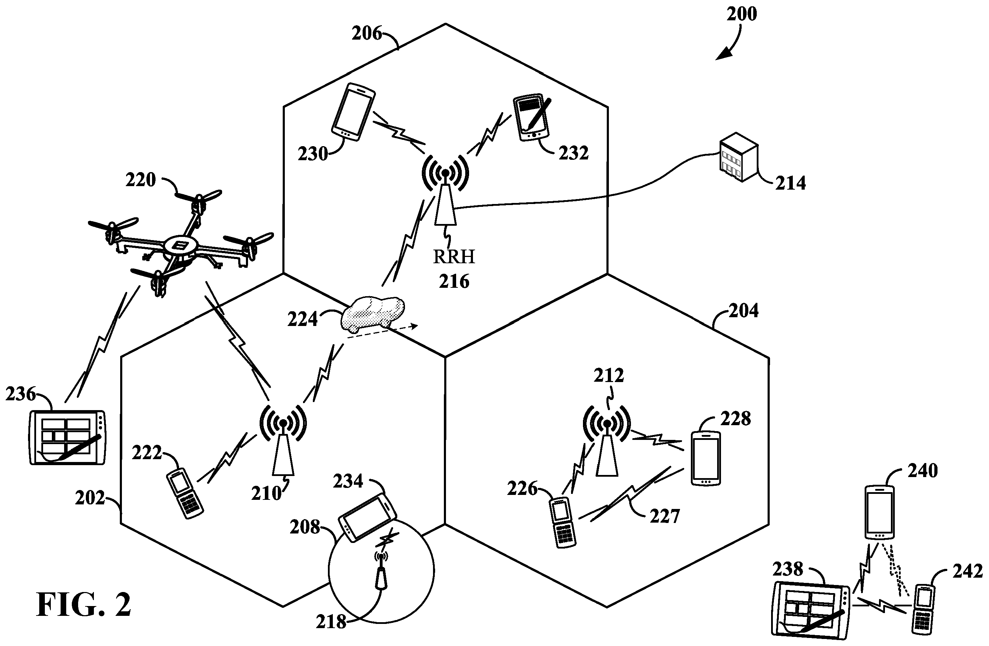

Referring now to FIG. 2, by way of example and without limitation, a schematic illustration of a RAN 200 is provided. In some examples, the RAN 200 may be the same as the RAN 104 described above and illustrated in FIG. 1. The geographic area covered by the RAN 200 may be divided into cellular regions (cells) that can be uniquely identified by a user equipment (UE) based on an identification broadcasted from one access point or base station. FIG. 2 illustrates macrocells 202, 204, and 206, and a small cell 208, each of which may include one or more sectors (not shown). A sector is a sub-area of a cell. All sectors within one cell are served by the same base station. A radio link within a sector can be identified by a single logical identification belonging to that sector. In a cell that is divided into sectors, the multiple sectors within a cell can be formed by groups of antennas with each antenna responsible for communication with UEs in a portion of the cell.

In FIG. 2, two base stations 210 and 212 are shown in cells 202 and 204; and a third base station 214 is shown controlling a remote radio head (RRH) 216 in cell 206. That is, a base station can have an integrated antenna or can be connected to an antenna or RRH by feeder cables. In the illustrated example, the cells 202, 204, and 126 may be referred to as macrocells, as the base stations 210, 212, and 214 support cells having a large size. Further, a base station 218 is shown in the small cell 208 (e.g., a microcell, picocell, femtocell, home base station, home Node B, home eNode B, etc.) which may overlap with one or more macrocells. In this example, the cell 208 may be referred to as a small cell, as the base station 218 supports a cell having a relatively small size. Cell sizing can be done according to system design as well as component constraints.

It is to be understood that the radio access network 200 may include any number of wireless base stations and cells. Further, a relay node may be deployed to extend the size or coverage area of a given cell. The base stations 210, 212, 214, 218 provide wireless access points to a core network for any number of mobile apparatuses. In some examples, the base stations 210, 212, 214, and/or 218 may be the same as the base station/scheduling entity 108 described above and illustrated in FIG. 1.

FIG. 2 further includes a quadcopter or drone 220, which may be configured to function as a base station. That is, in some examples, a cell may not necessarily be stationary, and the geographic area of the cell may move according to the location of a mobile base station such as the quadcopter 220.

Within the RAN 200, the cells may include UEs that may be in communication with one or more sectors of each cell. Further, each base station 210, 212, 214, 218, and 220 may be configured to provide an access point to a core network 102 (see FIG. 1) for all the UEs in the respective cells. For example, UEs 222 and 224 may be in communication with base station 210; UEs 226 and 228 may be in communication with base station 212; UEs 230 and 232 may be in communication with base station 214 by way of RRH 216; UE 234 may be in communication with base station 218; and UE 236 may be in communication with mobile base station 220. In some examples, the UEs 222, 224, 226, 228, 230, 232, 234, 236, 238, 240, and/or 242 may be the same as the UE/scheduled entity 106 described above and illustrated in FIG. 1.

In some examples, a mobile network node (e.g., quadcopter 220) may be configured to function as a UE. For example, the quadcopter 220 may operate within cell 202 by communicating with base station 210.

In the radio access network 200, the ability for a UE to communicate while moving, independent of its location, is referred to as mobility. The various physical channels between the UE and the radio access network are generally set up, maintained, and released under the control of an access and mobility management function (AMF, not illustrated, part of the core network 102 in FIG. 1), which may include a security context management function (SCMF) that manages the security context for both the control plane and the user plane functionality, and a security anchor function (SEAF) that performs authentication.

In various aspects of the disclosure, a radio access network 200 may utilize DL-based mobility or UL-based mobility to enable mobility and handovers (i.e., the transfer of a UE's connection from one radio channel to another). In a network configured for DL-based mobility, during a call with a scheduling entity, or at any other time, a UE may monitor various parameters of the signal from its serving cell as well as various parameters of neighboring cells. Depending on the quality of these parameters, the UE may maintain communication with one or more of the neighboring cells. During this time, if the UE moves from one cell to another, or if signal quality from a neighboring cell exceeds that from the serving cell for a given amount of time, the UE may undertake a handoff or handover from the serving cell to the neighboring (target) cell. For example, UE 224 (illustrated as a vehicle, although any suitable form of UE may be used) may move from the geographic area corresponding to its serving cell 202 to the geographic area corresponding to a neighbor cell 206. When the signal strength or quality from the neighbor cell 206 exceeds that of its serving cell 202 for a given amount of time, the UE 224 may transmit a reporting message to its serving base station 210 indicating this condition. In response, the UE 224 may receive a handover command, and the UE may undergo a handover to the cell 206.

In a network configured for UL-based mobility, UL reference signals from each UE may be utilized by the network to select a serving cell for each UE. In some examples, the base stations 210, 212, and 214/216 may broadcast unified synchronization signals (e.g., unified Primary Synchronization Signals (PSSs), unified Secondary Synchronization Signals (SSSs) and unified Physical Broadcast Channels (PBCH)). The UEs 222, 224, 226, 228, 230, and 232 may receive the unified synchronization signals, derive the carrier frequency and slot timing from the synchronization signals, and in response to deriving timing, transmit an uplink pilot or reference signal. The uplink pilot signal transmitted by a UE (e.g., UE 224) may be concurrently received by two or more cells (e.g., base stations 210 and 214/216) within the radio access network 200. Each of the cells may measure a strength of the pilot signal, and the radio access network (e.g., one or more of the base stations 210 and 214/216 and/or a central node within the core network) may determine a serving cell for the UE 224. As the UE 224 moves through the radio access network 200, the network may continue to monitor the uplink pilot signal transmitted by the UE 224. When the signal strength or quality of the pilot signal measured by a neighboring cell exceeds that of the signal strength or quality measured by the serving cell, the network 200 may handover the UE 224 from the serving cell to the neighboring cell, with or without informing the UE 224.

Although the synchronization signal transmitted by the base stations 210, 212, and 214/216 may be unified, the synchronization signal may not identify a particular cell, but rather may identify a zone of multiple cells operating on the same frequency and/or with the same timing. The use of zones in 5G networks or other next generation communication networks enables the uplink-based mobility framework and improves the efficiency of both the UE and the network, since the number of mobility messages that need to be exchanged between the UE and the network may be reduced.

In various implementations, the air interface in the radio access network 200 may utilize licensed spectrum, unlicensed spectrum, or shared spectrum. Licensed spectrum provides for exclusive use of a portion of the spectrum, generally by virtue of a mobile network operator purchasing a license from a government regulatory body. Unlicensed spectrum provides for shared use of a portion of the spectrum without need for a government-granted license. While compliance with some technical rules is generally still required to access unlicensed spectrum, generally, any operator or device may gain access. Shared spectrum may fall between licensed and unlicensed spectrum, wherein technical rules or limitations may be required to access the spectrum, but the spectrum may still be shared by multiple operators and/or multiple RATs. For example, the holder of a license for a portion of licensed spectrum may provide licensed shared access (LSA) to share that spectrum with other parties, e.g., with suitable licensee-determined conditions to gain access.

In order for transmissions over the radio access network 200 to obtain a low block error rate (BLER) while still achieving very high data rates, channel coding may be used. That is, wireless communication may generally utilize a suitable error correcting block code. In a typical block code, an information message or sequence is split up into code blocks (CBs), and an encoder (e.g., a CODEC) at the transmitting device then mathematically adds redundancy to the information message. Exploitation of this redundancy in the encoded information message can improve the reliability of the message, enabling correction for any bit errors that may occur due to the noise.

In early 5G NR specifications, user data is coded using quasi-cyclic low-density parity check (LDPC) with two different base graphs: one base graph is used for large code blocks and/or high code rates, while the other base graph is used otherwise. Control information and the physical broadcast channel (PBCH) are coded using Polar coding, based on nested sequences. For these channels, puncturing, shortening, and repetition are used for rate matching.

However, those of ordinary skill in the art will understand that aspects of the present disclosure may be implemented utilizing any suitable channel code. Various implementations of base stations (e.g., scheduling entities) 108 and UEs (e.g., scheduled entities) 106 may include suitable hardware and capabilities (e.g., an encoder, a decoder, and/or a CODEC) to utilize one or more of these channel codes for wireless communication.

The air interface in the radio access network 200 may utilize one or more duplexing algorithms. Duplex refers to a point-to-point communication link where both endpoints can communicate with one another in both directions. Full duplex means both endpoints can simultaneously communicate with one another. Half duplex means only one endpoint can send information to the other at a time. In a wireless link, a full duplex channel generally relies on physical isolation of a transmitter and receiver, and suitable interference cancellation technologies. Full duplex emulation is frequently implemented for wireless links by utilizing frequency division duplex (FDD) or time division duplex (TDD). In FDD, transmissions in different directions operate at different carrier frequencies. In TDD, transmissions in different directions on a given channel are separated from one another using time division multiplexing. That is, at some times the channel is dedicated for transmissions in one direction, while at other times the channel is dedicated for transmissions in the other direction, where the direction may change very rapidly, e.g., several times per slot.

The air interface in the radio access network 200 may utilize one or more multiplexing and multiple access algorithms to enable simultaneous communication of the various devices. For example, 5G NR specifications provide multiple access for UL transmissions from UEs 222 and 224 to base station 210, and for multiplexing for DL transmissions from base station 210 to one or more UEs 222 and 224, utilizing orthogonal frequency division multiplexing (OFDM) with a cyclic prefix (CP). In addition, for UL transmissions, 5G NR specifications provide support for discrete Fourier transform-spread-OFDM (DFT-s-OFDM) with a CP (also referred to as single-carrier FDMA (SC-FDMA)). However. within the scope of the present disclosure, multiplexing and multiple access are not limited to the above schemes, and may be provided utilizing time division multiple access (TDMA), code division multiple access (CDMA), frequency division multiple access (FDMA), sparse code multiple access (SCMA), resource spread multiple access (RSMA), or other suitable multiple access schemes. Further, multiplexing DL transmissions from the base station 210 to UEs 222 and 224 may be provided utilizing time division multiplexing (TDM), code division multiplexing (CDM), frequency division multiplexing (FDM), orthogonal frequency division multiplexing (OFDM), sparse code multiplexing (SCM), or other suitable multiplexing schemes.

In some examples, access to the air interface may be scheduled, where a scheduling entity (e.g., a base station) allocates resources (e.g., time-frequency resources) for communication among some or all devices and equipment within its service area or cell. Within the present disclosure, as discussed further below, the scheduling entity may be responsible for scheduling, assigning, reconfiguring, and releasing resources for one or more scheduled entities. That is, for scheduled communication, UEs or scheduled entities utilize resources allocated by the scheduling entity.

Base stations are not the only entities that may function as a scheduling entity. That is, in some examples, a UE may function as a scheduling entity, scheduling resources for one or more scheduled entities (e.g., one or more other UEs). For example, UE 238 is illustrated communicating with UEs 240 and 242. In some examples, the UE 238 is functioning as a scheduling entity, while the UEs 240 and 242 may function as scheduled entities. In other examples, sidelink or other type of direct link signals may be communicated directly between UEs without necessarily relying on scheduling or control information from another entity. For example, UEs 238, 240, and 242 may communicate over a direct link in a device-to-device (D2D), peer-to-peer (P2P), vehicle-to-everything (V2X), and/or in a mesh network. In a mesh network example, UEs 240 and 242 may optionally communicate directly with one another in addition to communicating with a scheduling entity (e.g., UE 238).

In some examples, UE 238 may be a transmitting sidelink device that reserves resources on a sidelink carrier for the transmission of sidelink signals to UEs 240 and 242 in a D2D or V2X network. Here, UEs 240 and 242 are each receiving sidelink devices. UEs 240 and 242 may, in turn, reserve additional resources on the sidelink carrier for subsequent sidelink transmissions.

In some examples, two or more UEs (e.g., UEs 226 and 228) within the coverage area of a serving base station 212 may communicate with both the base station 212 using cellular signals and with each other using sidelink signals 227 without relaying that communication through the base station. In this example, the base station 227 or one or both of the UEs 226 and 228 may function as scheduling entities to schedule sidelink communication between UEs 226 and 228. For example, UEs 126 and 128 may communicate sidelink signals 227 within a vehicle-to-everything (V2X) network.

Two primary technologies that may be used by V2X networks include dedicated short range communication (DSRC) based on IEEE 802.11p standards and cellular V2X based on LTE and/or 5G (New Radio) standards. Various aspects of the present disclosure may relate to New Radio (NR) cellular V2X networks, referred to herein as V2X networks, for simplicity. However, it should be understood that the concepts disclosed herein may not be limited to a particular V2X standard or may be directed to sidelink networks other than V2X networks.

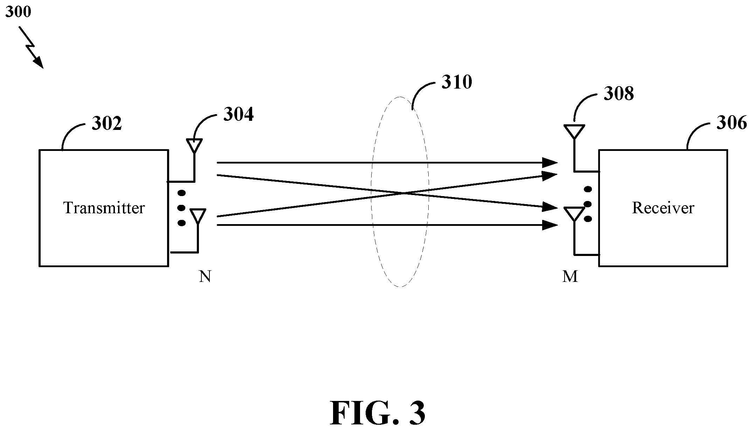

In some aspects of the disclosure, the base station/scheduling entity and/or UE/scheduled entity may be configured for beamforming and/or multiple-input multiple-output (MIMO) technology. FIG. 3 illustrates an example of a wireless communication system 300 supporting MIMO. In a MIMO system, a transmitter 302 includes multiple transmit antennas 304 (e.g., N transmit antennas) and a receiver 306 includes multiple receive antennas 308 (e.g., M receive antennas). Thus, there are N × M signal paths 310 from the transmit antennas 304 to the receive antennas 308. Each of the transmitter 302 and the receiver 306 may be implemented, for example, within a base station/scheduling entity 108, a UE/scheduled entity 106, or any other suitable wireless communication device.

The use of such multiple antenna technology enables the wireless communication system to exploit the spatial domain to support spatial multiplexing, beamforming, and transmit diversity. Spatial multiplexing may be used to transmit different streams of data, also referred to as layers, simultaneously on the same time-frequency resource. The data streams may be transmitted to a single UE to increase the data rate or to multiple UEs to increase the overall system capacity, the latter being referred to as multi-user MIMO (MU-MIMO). This is achieved by spatially precoding each data stream (i.e., multiplying the data streams with different weighting and phase shifting) and then transmitting each spatially precoded stream through multiple transmit antennas on the downlink. The spatially precoded data streams arrive at the UE(s) with different spatial signatures, which enables each of the UE(s) to recover the one or more data streams destined for that UE. On the uplink, each UE transmits a spatially precoded data stream, which enables the base station to identify the source of each spatially precoded data stream.

The number of data streams or layers corresponds to the rank of the transmission. In general, the rank of the MIMO system 300 is limited by the number of transmit or receive antennas 304 or 308, whichever is lower. In addition, the channel conditions at the UE, as well as other considerations, such as the available resources at the base station, may also affect the transmission rank. For example, the rank (and therefore, the number of data streams) assigned to a particular UE on the downlink may be determined based on the rank indicator (RI) transmitted from the UE to the base station. The RI may be determined based on the antenna configuration (e.g., the number of transmit and receive antennas) and a measured signal-to-interference-and-noise ratio (SINR) on each of the receive antennas. The RI may indicate, for example, the number of layers that may be supported under the current channel conditions. The base station may use the RI, along with resource information (e.g., the available resources and amount of data to be scheduled for the UE), to assign a transmission rank to the UE.

In Time Division Duplex (TDD) systems, the UL and DL are reciprocal, in that each uses different time slots of the same frequency bandwidth. Therefore, in TDD systems, the base station may assign the rank for DL MIMO transmissions based on UL SINR measurements (e.g., based on a Sounding Reference Signal (SRS) transmitted from the UE or other pilot signal). Based on the assigned rank, the base station may then transmit the CSI-RS with separate C-RS sequences for each layer to provide for multilayer channel estimation. From the CSI-RS, the UE may measure the channel quality across layers and resource blocks and feedback the CQI and RI values to the base station for use in updating the rank and assigning REs for future downlink transmissions.

In the simplest case, as shown in FIG. 3, a rank-2 spatial multiplexing transmission on a 2x2 MIMO antenna configuration will transmit one data stream from each transmit antenna 304. Each data stream reaches each receive antenna 308 along a different signal path 310. The receiver 306 may then reconstruct the data streams using the received signals from each receive antenna 308.

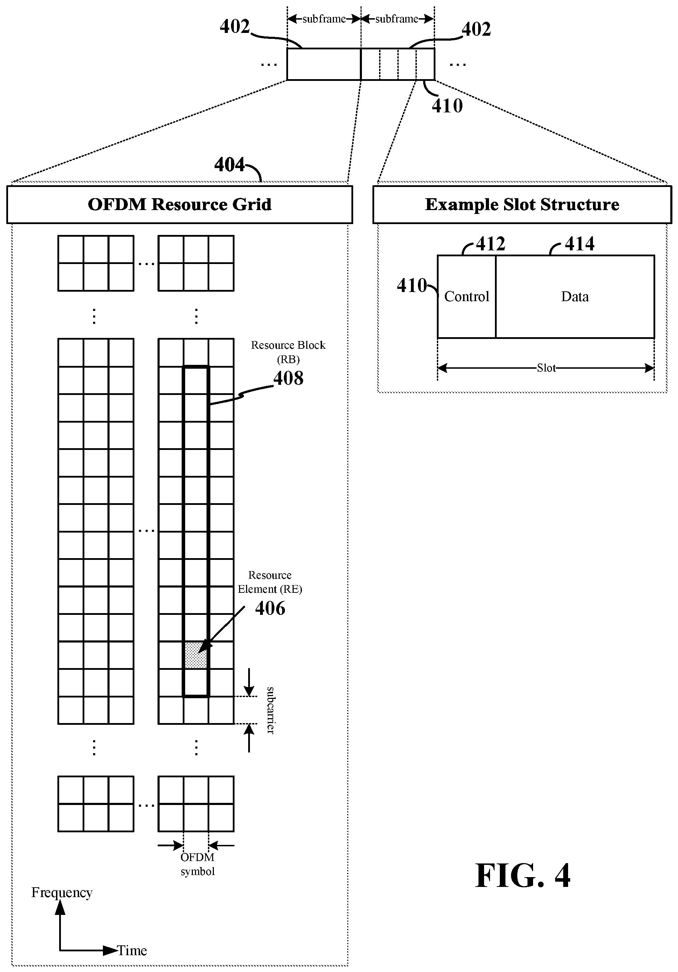

Various aspects of the present disclosure will be described with reference to an OFDM waveform, schematically illustrated in FIG. 4. It should be understood by those of ordinary skill in the art that the various aspects of the present disclosure may be applied to a DFT-s-OFDMA waveform in substantially the same way as described herein below. That is, while some examples of the present disclosure may focus on an OFDM link for clarity, it should be understood that the same principles may be applied as well to DFT-s-OFDMA waveforms.

Within the present disclosure, a frame refers to a duration of 10 ms for wireless transmissions, with each frame consisting of 10 subframes of 1 ms each. On a given carrier, there may be one set of frames in the UL, and another set of frames in the DL. Referring now to FIG. 4, an expanded view of an exemplary DL subframe 402 is illustrated, showing an OFDM resource grid 404. However, as those skilled in the art will readily appreciate, the PHY transmission structure for any particular application may vary from the example described here, depending on any number of factors. Here, time is in the horizontal direction with units of OFDM symbols; and frequency is in the vertical direction with units of subcarriers or tones.

The resource grid 404 may be used to schematically represent time-frequency resources for a given antenna port. That is, in a MIMO implementation with multiple antenna ports available, a corresponding multiple number of resource grids 404 may be available for communication. The resource grid 404 is divided into multiple resource elements (REs) 406. An RE, which is 1 subcarrier × 1 symbol, is the smallest discrete part of the time-frequency grid, and contains a single complex value representing data from a physical channel or signal. Depending on the modulation utilized in a particular implementation, each RE may represent one or more bits of information. In some examples, a block of REs may be referred to as a physical resource block (PRB) or more simply a resource block (RB) 408, which contains any suitable number of consecutive subcarriers (also referred to herein as or interlaces) in the frequency domain. In one example, an RB may include 12 subcarriers, a number independent of the numerology used. In some examples, depending on the numerology, an RB may include any suitable number of consecutive OFDM symbols in the time domain. Within the present disclosure, it is assumed that a single RB such as the RB 408 entirely corresponds to a single direction of communication (either transmission or reception for a given device).

A UE generally utilizes only a subset of the resource grid 404. An RB may be the smallest unit of resources that can be allocated to a UE. Thus, the more RBs scheduled for a UE, and the higher the modulation scheme chosen for the air interface, the higher the data rate for the UE.

In this illustration, the RB 408 is shown as occupying less than the entire bandwidth of the subframe 402, with some subcarriers illustrated above and below the RB 408. In a given implementation, the subframe 402 may have a bandwidth corresponding to any number of one or more RBs 408. Further, in this illustration, the RB 408 is shown as occupying less than the entire duration of the subframe 402, although this is merely one possible example.

Each 1 ms subframe 402 may consist of one or multiple adjacent slots. In the example shown in FIG. 4, one subframe 402 includes four slots 410, as an illustrative example. In some examples, a slot may be defined according to a specified number of OFDM symbols with a given cyclic prefix (CP) length. For example, a slot may include 7 or 14 OFDM symbols with a nominal CP. Additional examples may include mini-slots having a shorter duration (e.g., one or two OFDM symbols). These mini-slots may in some cases be transmitted occupying resources scheduled for ongoing slot transmissions for the same or for different UEs.

An expanded view of one of the slots 410 illustrates the slot 410 including a control region 412 and a data region 414. In general, the control region 412 may carry control channels (e.g., PDCCH), and the data region 414 may carry data channels (e.g., PDSCH or PUSCH). Of course, a slot may contain all DL, all UL, or at least one DL portion and at least one UL portion. The simple structure illustrated in FIG. 4 is merely exemplary in nature, and different slot structures may be utilized, and may include one or more of each of the control region(s) and data region(s).

In OFDM, to maintain orthogonality of the subcarriers or tones, the subcarrier spacing may be equal to the inverse of the symbol period. A numerology of an OFDM waveform refers to its particular subcarrier spacing and cyclic prefix (CP) overhead. A scalable numerology refers to the capability of the network to select different subcarrier spacings, and accordingly, with each spacing, to select the corresponding symbol duration, including the CP length. With a scalable numerology, a nominal subcarrier spacing (SCS) may be scaled upward or downward by integer multiples. In this manner, regardless of CP overhead and the selected SCS, symbol boundaries may be aligned at certain common multiples of symbols (e.g., aligned at the boundaries of each 1 ms subframe). The range of SCS may include any suitable SCS. For example, a scalable numerology may support a SCS ranging from 15 kHz to 480 kHz.

Although not illustrated in FIG. 4, the various REs 406 within a RB 408 may be scheduled to carry one or more physical channels, including control channels, shared channels, data channels, etc. Other REs 406 within the RB 408 may also carry pilots or reference signals, including but not limited to a demodulation reference signal (DMRS) a control reference signal (CRS), or a sounding reference signal (SRS). These pilots or reference signals may provide for a receiving device to perform channel estimation of the corresponding channel, which may enable coherent demodulation/detection of the control and/or data channels within the RB 408.

In some examples, the slot 410 may be utilized for broadcast or unicast communication. For example, a broadcast, multicast, or groupcast communication may refer to a point-to-multipoint transmission by one device (e.g., a base station, UE, or other similar device) to other devices. Here, a broadcast communication is delivered to all devices, whereas a multicast communication is delivered to multiple intended recipient devices. A unicast communication may refer to a point-to-point transmission by a one device to a single other device.

In an example of cellular communication over a cellular carrier via a Uu interface, for a DL transmission, the transmitting device (e.g., the base station 108) may allocate one or more REs 406 (e.g., within a control region 412) to carry DL control information 114 including one or more DL control channels that generally carry information originating from higher layers, such as a physical broadcast channel (PBCH), a physical downlink control channel (PDCCH), etc., to one or more UEs 106. In addition, DL REs may be allocated to carry DL physical signals that generally do not carry information originating from higher layers. These DL physical signals may include a primary synchronization signal (PSS); a secondary synchronization signal (SSS); demodulation reference signals (DM-RS); phase-tracking reference signals (PT-RS); channel-state information reference signals (CSI-RS); etc.

The synchronization signals PSS and SSS (collectively referred to as SS), and in some examples, the PBCH, may be transmitted in an SS block that includes 4 consecutive OFDM symbols, numbered via a time index in increasing order from 0 to 3. In the frequency domain, the SS block may extend over 240 contiguous subcarriers, with the subcarriers being numbered via a frequency index in increasing order from 0 to 239. Of course, the present disclosure is not limited to this specific SS block configuration. Other nonlimiting examples may utilize greater or fewer than two synchronization signals; may include one or more supplemental channels in addition to the PBCH; may omit a PBCH; and/or may utilize nonconsecutive symbols for an SS block, within the scope of the present disclosure.

The PDCCH may carry downlink control information (DCI) for one or more UEs in a cell, including but not limited to power control commands, scheduling information, a grant, and/or an assignment of REs for DL and UL transmissions.

In an UL transmission, the transmitting device (e.g., the UE 106) may utilize one or more REs 406 to carry UL control information 118 originating from higher layers via one or more UL control channels, such as a physical uplink control channel (PUCCH), a physical random access channel (PRACH), etc., to the base station 108. Further, UL REs may carry UL physical signals that generally do not carry information originating from higher layers, such as demodulation reference signals (DM-RS), phase-tracking reference signals (PT-RS), sounding reference signals (SRS), etc. In some examples, the control information 118 may include a scheduling request (SR), i.e., a request for the base station 108 to schedule uplink transmissions. Here, in response to the SR transmitted on the control channel 118, the base station 108 may transmit downlink control information 114 that may schedule resources for uplink packet transmissions. UL control information may also include hybrid automatic repeat request (HARQ) feedback such as an acknowledgment (ACK) or negative acknowledgment (NACK), channel state information (CSI), or any other suitable UL control information. HARQ is a technique well-known to those of ordinary skill in the art, wherein the integrity of packet transmissions may be checked at the receiving side for accuracy, e.g., utilizing any suitable integrity checking mechanism, such as a checksum or a cyclic redundancy check (CRC). If the integrity of the transmission confirmed, an ACK may be transmitted, whereas if not confirmed, a NACK may be transmitted. In response to a NACK, the transmitting device may send a HARQ retransmission, which may implement chase combining, incremental redundancy, etc.

In addition to control information, one or more REs 406 (e.g., within the data region 414) may be allocated for user data or traffic data. Such traffic may be carried on one or more traffic channels, such as, for a DL transmission, a physical downlink shared channel (PDSCH); or for an UL transmission, a physical uplink shared channel (PUSCH).

In order for a UE to gain initial access to a cell, the RAN may provide system information (SI) characterizing the cell. This system information may be provided utilizing minimum system information (MSI), and other system information (OSI). The MSI may be periodically broadcast over the cell to provide the most basic information required for initial cell access, and for acquiring any OSI that may be broadcast periodically or sent on-demand. In some examples, the MSI may be provided over two different downlink channels. For example, the PBCH may carry a master information block (MIB), and the PDSCH may carry a system information block type 1 (SIB1). In the art, SIB1 may be referred to as the remaining minimum system information (RMSI).

OSI may include any SI that is not broadcast in the MSI. In some examples, the PDSCH may carry a plurality of SIBs, not limited to SIB1, discussed above. Here, the OSI may be provided in these SIBs, e.g., SIB2 and above.

In an example of sidelink communication over a sidelink carrier via a Proximity Service (ProSe) PC5 interface, the control region 312 of the slot 310 may include a physical sidelink control channel (PSCCH) including sidelink control information (SCI) transmitted by an initiating (transmitting) sidelink device (e.g., V2X or other sidelink device) towards a set of one or more other receiving sidelink devices. The data region 314 of the slot 310 may include a physical sidelink shared channel (PSSCH) including the data transmitted by the initiating (transmitting) sidelink device within resources reserved over the sidelink carrier by the transmitting sidelink device.

The channels or carriers described above and illustrated in FIGs. 1 and 4 are not necessarily all the channels or carriers that may be utilized between a base station 108 and UEs 106, and those of ordinary skill in the art will recognize that other channels or carriers may be utilized in addition to those illustrated, such as other traffic, control, and feedback channels.

These physical channels described above are generally multiplexed and mapped to transport channels for handling at the medium access control (MAC) layer. Transport channels carry blocks of information called transport blocks (TB). The transport block size (TBS), which may correspond to a number of bits of information, may be a controlled parameter, based on the modulation and coding scheme (MCS) and the number of RBs in a given transmission.

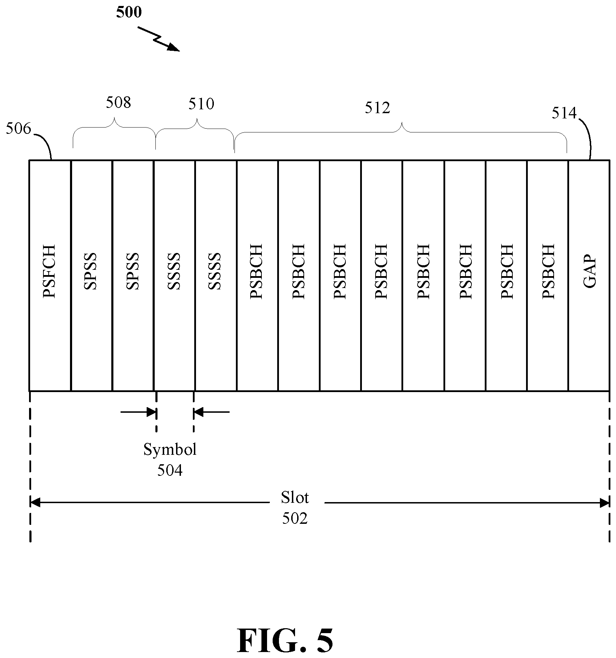

FIG. 5 is an illustration 500 of a Physical Sidelink Broadcast Channel (PSBCH) synchronization signal block (SSB) occupying slot 502 that includes a plurality of symbols 504, configured for NR sidelink communication. For NR sidelink communications, one sidelink bandwidth part (BWP) may be configured on a carrier, where the minimum unit for resource scheduling in the frequency domain is a subchannel, that may include 10, 15, 20, 25, 50, 75, or 100 consecutive RBs depending on practical configuration. Regarding the physical channels and reference signals of NR sidelink, PSSCH may be transmitted by a sidelink transmitting UE, which conveys sidelink transmission data, system information blocks (SIBs) for radio resource control (RRC) configuration, and a portion of sidelink control information (SCI). For the PSSCH, 16 quadrature amplitude modulation (QAM) and 64 QAM with low density parity check (LDPC) code may be utilized, and 256 QAM may also be applied, depending on the UE capability. The PSFCH may be communicated by a sidelink receiving UE for unicast and groupcast, and may convey 1-bit information over 1 RB for the HARQ acknowledgement (ACK) and the negative ACK (NACK). In some illustrative embodiments, channel state information (CSI) may be carried in the medium access control (MAC) control element (CE) over the PSSCH instead of the PSFCH.

When the traffic to be sent to a receiving UE arrives at a transmitting UE, a transmitting UE may first send the PSCCH, which conveys data including a part of sidelink control information (SCI) to be decoded by any UE for the channel sensing purpose, including the reserved time-frequency resources for transmissions, demodulation reference signal (DMRS) pattern and antenna port, etc. For the PSCCH, the SCI may be transmitted using quadrature phase shift keying (QPSK) with polar code. Another part of SCI may carry the remaining scheduling and control information to be decoded by the target receiving UE, and may share the associated PSSCH resources and the PSSCH DMRS with indications in the 1st-stage SCI for its resource allocation.

Similar to downlink transmissions in NR, in sidelink transmissions, primary and secondary synchronization signals (SPSS and SSSS, respectively) are supported, in which M-sequence and Gold sequence are used to generate the SPSS and SSSS, respectively. Through detecting the SPSS and SSSS, a UE is able to identify the sidelink synchronization identity (SSID) from the UE sending the SPSS/SSSS, where there may be, for example, 2 SPSS sequences and 336 SSSS sequences forming 672 SSIDs. Through detecting the SPSS/SSSS, a UE is therefore able to know the characteristics of the UE transmitting the SPSS/SSSS. A series of processes of acquiring timing and frequency synchronization together with SSIDs of UEs may be performed during initial cell search. In some examples, the UE sending the SPSS/SSSS may not be necessarily involved in sidelink transmissions, and a node (e.g., UE/eNB/gNB) sending the SPSS/SSSS may operate as a synchronization source.

The example of FIG. 5 shows a slot that includes a PSFCH symbol 506, followed by a plurality of SPSS symbols 508 and SSSS symbols 510 for synchronization. After synchronization, a plurality of PSBCH symbols 512 are provided, followed by a gap symbol 514 that may be utilized as a guard period. The PSBCH 512 is transmitted along with the SPSS/SSSS as a synchronization signal/PSBCH block (SSB), as shown in the figure which illustrates the structure of SSB for a normal cycle prefix (NCP). The SSB may have the same numerology as PSCCH/PSSCH on the carrier, and an SSB is transmitted within the bandwidth of the configured BWP. In some examples, the PSBCH symbol data 512 conveys information related to synchronization, such as the direct frame number (DFN), indication of the slot and symbol level time resources for sidelink transmissions, in-coverage indicator, etc. The SSB may be transmitted periodically, for example, at every 160ms. In addition, there may be N repetitions within the 160ms period with configurable starting offset and the interval. N may be configured depending on the SCS. Physical reference signals, such as channel state information reference signal (CSI-RS) may also be used for sidelink transmissions.

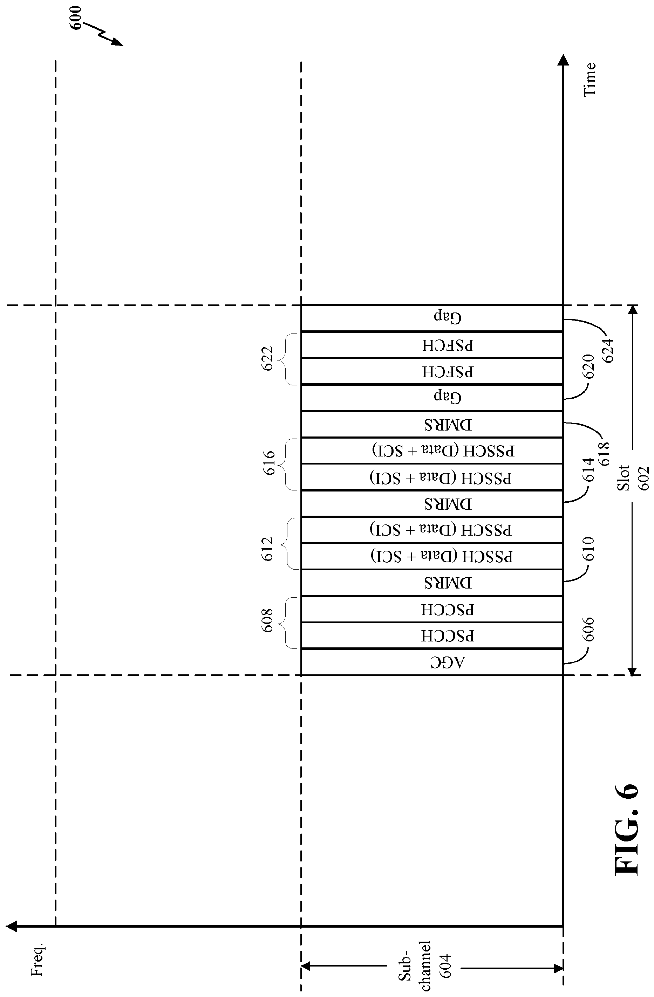

FIG. 6 is an illustration of NR sidelink transmission, with multiplexing of physical sidelink control channel (PSCCH), physical sidelink shared channel (PSSCH) and associated physical sidelink feedback channel (PSFCH) in both the time and frequency domains. In this example, the figure illustrates data occupying a slot 602 of a plurality of slots (shown as dotted lines) in the time domain for a subchannel 604 of a plurality of subchannels in the frequency domain. For NR sidelink transmissions, multiplexing of PSCCH 608, PSSCH 612, and associated PSFCH 622 is illustrated in the figure, where the PSCCH 608 and the PSSCH 612 can be multiplexed both in the time and frequency domains. It should be noted that in the example of FIG. 6, PSSCH 612 is shown as occupying one subchannel (604), while PSCCH may span over multiple subchannels in general.

In the example, automatic gain control (AGC) symbol 606 may be used to assist in regulating the signal strength at the input of the ADCs such that the required signal SNR for proper decoding is met. The PSCCH symbols 608 can occupy a number of consecutive RBs in the starting subchannel of the PSSCH transmission, e.g., over 2 or 3 symbols at the beginning of a slot, while the PSSCH 612, 616 may span over multiple subchannels, with associated DMRS symbols 610, 614, 618. In some examples, the last two symbols 622, excluding the gap (or guard period (GP)) 620, 624 are able to accommodate the PSFCH at every one, two, or four slots. Given a certain time-frequency location of the PSSCH, the candidate resources of the corresponding PSFCH should be identified first in order to identify the "actual" time-frequency location (resources) of the corresponding PSFCH.

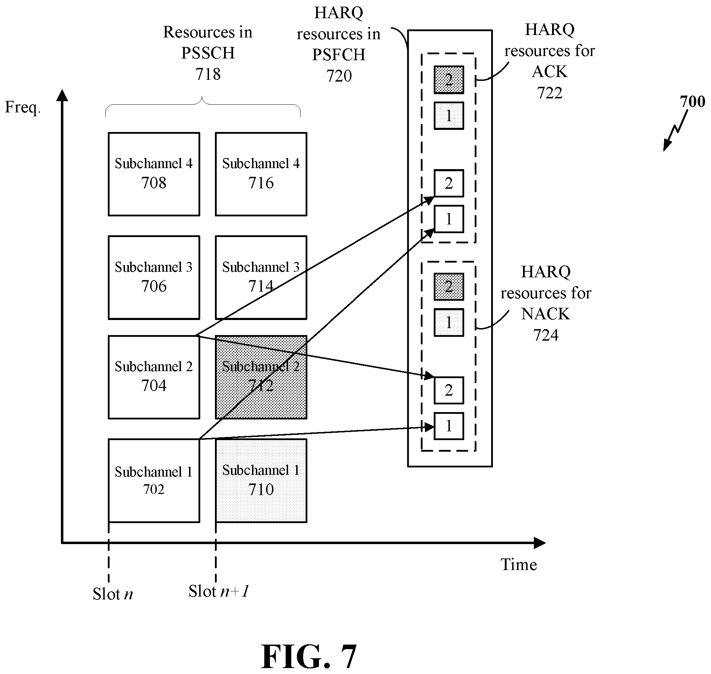

FIG. 7 is an illustration 700 of association (mapping) of resource blocks in subchannels of physical sidelink shared channel (PSSCH) and physical sidelink feedback channel (PSFCH). In this example, resources (RBs) in the PSSCH 718 are shown as subchannels 1-4 (702-708) in time slot *n,* and subchannels 1-4 (710-716) in time slot *n+1.* The subchannels (702-708, 710-716) are configured in their respective frequency bins as shown along the frequency axis in the figure. In this simplified example, the HARQ resources in PSFCH 720 include HARQ resources for ACK 722 and HARQ resources for NACK 724, where RB's for each subchannel in PSSCH (702-708, 710-716) are associated in PSFCH 720 as shown in the figure. For slot *n,* it can be seen that subchannel 1 702 is associated with block "1" in each of HARQ resources for ACK 722 and NACK 724. Similarly, subchannel 2 704 is associated with block "2" in each of HARQ resources for ACK 722 and NACK 724. For slot *n+1,* it can be seen that subchannel 1 710 and subchannel 2 712 are similarly associated with RBs "1" and "2", respectively, where subchannel 1 710 is represented in the figure with light shading, and subchannel 2 712 is represented in the figure with darker shading.

For a PSSCH transmission, candidate resources of the corresponding PSFCH (720) may be configured as a set of RBs associated the starting subchannel and slot used for that PSSCH (718). Within the set of RBs configured for the actual PSFCH transmission, the first x number of RBs are associated with the first subchannel in the first slot associated with the PSFCH slot. the second x number of RBs are with the first subchannel in the second slot associated with the PSFCH slot, and so on, as illustrated in the figure. The frequency resources for the actual PSFCH transmission may be indicated by a bitmap for RBs in a resource (comb) pool. For each PSFCH, resources for ACK and NACK may be separated.

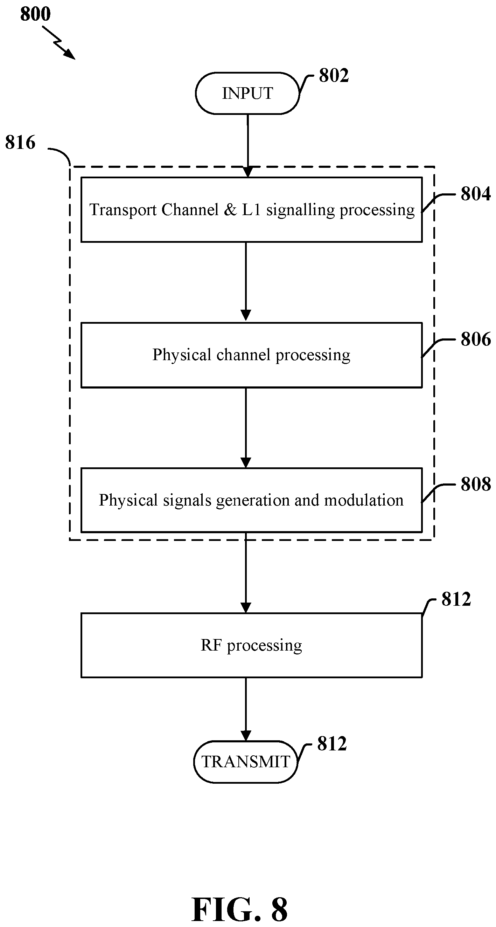

FIG. 8 is a block diagram 800 illustrating sidelink baseband processing under an illustrative example. An input is generated or received in block 802, which may include relevant communication data including, but not limited to, a sidelink (SL) Master Information Block (MIB-SL), a discovery transport block, SCI format 0/1, and a communications transport block. From here the input is subjected to sidelink baseband processing 816 generally designated as a dotted box in the figure. In some examples, transport channel & layer 1 (L1) signaling processing block 804 assists in timing synchronization and system information acquisition, sidelink discovery and sidelink communication, and handles processing of a broadcast transport channel (SL-BCH), sidelink discovery transport channel (SL-DCH) and sidelink communication transport channel (SL-DCH).

Transport channel & L1 signaling processing block 802 may be configured to perform code block segmentation and CRC attachment processing, as well as transport block CRC attachment processing. In addition, transport channel & L1 signaling processing block 804 may perform channel coding, rate matching and interleaving before forwarding a communication signal to physical channel processing block 806, which handles PSBCH, PSDCH, PSCCH and PSSCH processing. Physical channel processing block 806 may be configured to perform scrambling, modulation, transform precoding and mapping to physical resources, before the signal is handled by the physical signals generation and modulation block 808, which includes SL-DMRS, PSSS and SSSS signal processing, among others. The physical signals generation and modulation block 808 engages in demodulation of reference signals and processing of synchronization preambles in order to map symbols to physical resources and modulate the signals using, for example, single-carrier frequency division multiple access (SC-FDMA) before processing the signal for RF processing in block 812 and subsequent transmission in block 812.

Generally, timing synchronization and system information acquisition is facilitated by a broadcast transport channel, SL-BCH, and its physical counterpart, PSBCH. These channels may be considered similar to the BCH/PBCH broadcast channel used in LTE DL for cell and system acquisition support. The channels may be used for broadcasting a set of pre-ambles and basic system information within a certain region. A set of primary and secondary preambles, PSSS and SSSS, are used for synchronization purposes. The SL Master Information Block, MIB-SL carries the sidelink system information. Sidelink discovery may facilitated through a transport channel, SL-DCH and its physical counterpart, PSDCH. SL-DCH may follow the Downlink Shared Channel structure. In some examples, higher-layer specifications are absent in the discovery mode, since the announcement messages sent by UEs are PHY Transport Blocks formed with zero MAC overhead. Filling the TB payload may be left open and may depend on applications, such as proximity services (ProSe). Sidelink communication may be facilitated using a transport channel, SL-SCH, and its physical counterpart, PSSCH. In order for a receiving UE to successfully decode the physical communication channels, information regarding the specific resources assigned for transmission and the transmission configuration is needed, and are carried in the sidelink control channel, (SCI), which resembles a downlink DCI concept. The SCI may be carried in the PSCCH channel, and may be configured under SCI Format 0 and/or SCI Format 1. Physical channels estimation is enabled by SL demodulation reference signals (SL-DMRS). SL-DMRSs may be multiplexed with the payload of the PSBCH, PSDCH, PSCCH, and PSSCH. In some examples, two DMRS symbols may be used per subframe for PSBCH, PSDCH, PSCCH, PSSCH. In further examples, three DMRS symbols may be used for PSBCH, and four symbols for PSCCH and PSSCH.

Regarding sidelink communication, such as 3GPP Rel-16 NR V2X, channel state information (CSI-RS) is configured to be aperiodic and is included in PSSCH. Typically, only one resource element (RE) per resource block (RB) (density 1) is provided and only 1 or 2 ports are supported. For communication in the unlicensed spectrum or band (NR-U) (e.g., 5.125-7.125GHz), interlace waveforms are defined to satisfy occupied channel bandwidth (OCB) requirements in the unlicensed band. However, when PSSCH is configured to an interlaced waveform, specific challenges may arise regarding the transmission of CSI-RS, since, for example, in legacy systems (i.e., pre-3GPP Rel-16 NR), the CSI-RS waveforms may not match. Accordingly, there is a need to multiplex legacy SL CSI-RS waveforms with the PSSCH waveform. Interlaced CSI-RS waveforms have been difficult to incorporate into PSCCH, as they would add additional complexity to channel estimation. CSI-RS in sidelink is configured into a comb-like signal that occupies 1 or 2 contiguous REs per RB for 1 or 2 channel ports, respectively. Thus, for example, if one port is being used, CSI-RS occupies one RE per RB, and if two ports are being used, CSI-RS would occupy two contiguous REs per RB. For example, for 1 port CSI-RS, comb-like resource mapping in frequency domain without CDM may be used, where, for density of 1 or 0.5 REs/PRB, comb-12 may be used within a PRB while every other PRB may be mapped for density of 0.5 REs/PRB.

A UE may transmit sidelink CSI-RS within a PSSCH transmission, provided that CSI reporting is enabled by higher level parameter and a CSI request field in the corresponding SCI format is triggered or set (e.g., to "1"). Parameters for CSI-RS transmission may be configured via a higher layer parameter, for example, to indicate the number of ports for SL CSI-RS, the first OFDM symbol in a PRB used for SL CSI-RS and/or frequency domain allocation for SL CSI-RS.

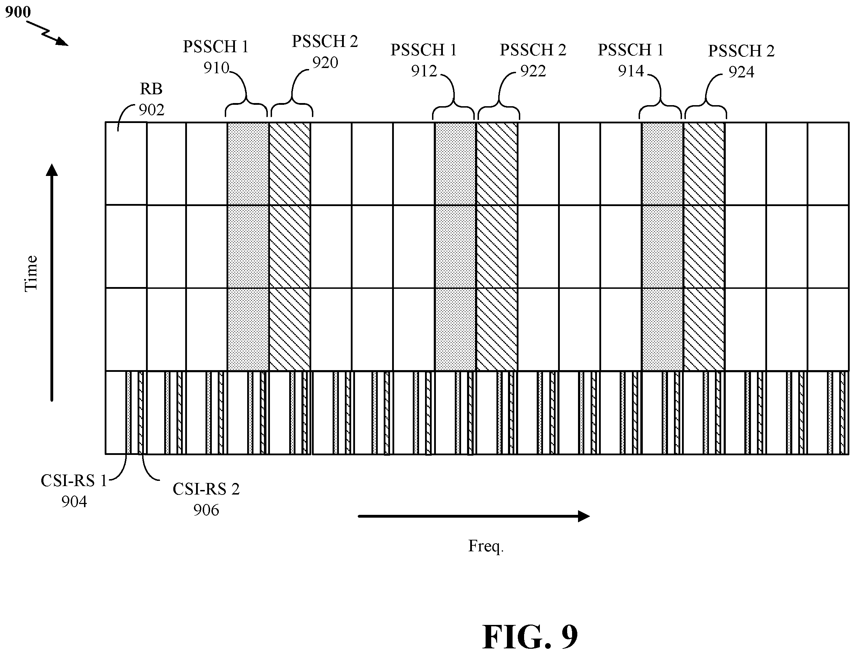

FIG. 9 is an illustration 900 of physical sidelink shared channel (PSSCH) communication utilizing channel state information (CSI) triggering. In this example, a PSSCH interlacing structure is shown, where a plurality of RBs 902 are shown, where a first PSSCH ("PSSCH 1") is configured as interlaced physical resource blocks (910, 912, 914) and a second PSSCH ("PSSCH 2") is also configured as interlaced physical resource blocks (920, 922, 924) for a different frequency band. In some examples, each interlace (910-914, 920-924) may be used as a unit for scheduling PSSCH, where one (e.g., PSSCH 1) or the other (e.g., PSSCH 2) may be used by one or more UEs. One of ordinary skill in the art will understand that the example of FIG. 9 is a simplified example, and that additional or alternate RBs and/or interlaces may be utilized depending on the application. For example, utilizing 20MHz with 30khz subcarrier spacing, up to 5 interlaces for PSSCH may be supported, where up to 10RBs may be used for each interlace.

In some examples, TDM for CSI-RS may be configured as the last symbol position in PSSCH. In the example of FIG. 9, each CSI-RS 1 (904) is associated with PSSCH 1, while each CSI-RS 2 (906) is associated with PSSCH 2. Here, the CSI-RS is TDMed with a RE comb structure (comb-12) along the horizontal frequency axis. For two ports, each CSI-RS (904, 906) may be TDMed using two contiguous REs per RB as is shown in the figure. In some examples, PSSCH does not transmit on the last position of legacy PSSCH if CSI is triggered. In some example, rate matching may be performed.

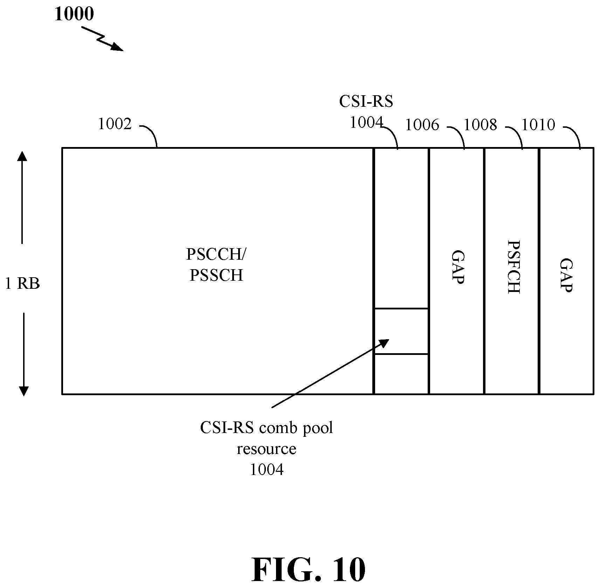

FIG. 10 is an illustration of a resource block 1000 for physical sidelink control channel (PSCCH) and physical sidelink shared channel (PSSCH) utilizing physical sidelink feedback channel (PSFCH). In this example, 1 RB is shown (e.g., see, 902) where the resource block 1000 includes PSCCH/PSSCH data 1002, CSI-RS 1004, and PSFCH data that includes a gap, or guard band, before and after the signal (1006, 1010). CSI-RS 1004 is further broken down in the figure to show a CSI-RS comb pool resource 1004. During operation, CSI-RS undergoes TDM to be in the last symbol position of PSSCH. IF PSFCH 1008 is present in a current slot, CSI-RS is mapped to the symbol preceding the gap (1006) before PSFCH 1008.

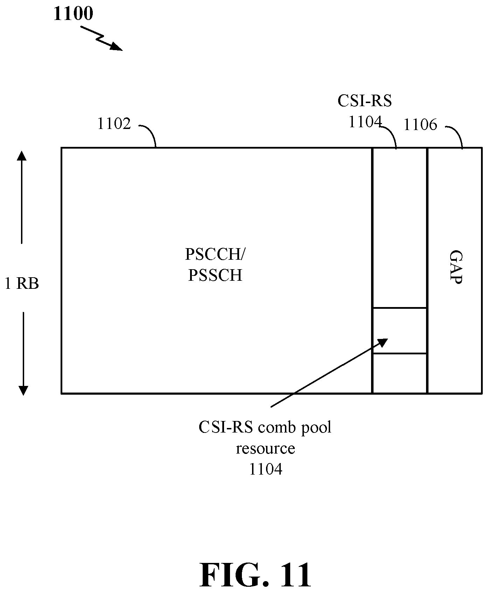

FIG. 11 is an illustration of a resource block 1100 for physical sidelink control channel (PSCCH) and physical sidelink shared channel (PSSCH) without utilizing physical sidelink feedback channel (PSFCH). Similar to the example of FIG. 10, the resource block 1100 includes PSCCH/PSSCH data 1102, CSI-RS 1104, and a gap, or guard band, 1106. CSI-RS 1004 is further broken down in the figure to show a CSI-RS comb pool resource 1004. CSI-RS 1104 is further broken down in the figure to show a CSI-RS comb pool resource 1104. As mentioned above, no PSFCH is present in this example. With no PSFCH present, CSI-RS is mapped to the last symbol position in PSSCH, which is before the last gap in the configured sidelink symbols.

In some cases, CSI-RS may not be triggered at all times. Accordingly, there may be instances where the last PSSCH symbol for CSI-RS does not necessarily need to be reserved. For example, a CSI request in SCI 0-2 (second stage SCI 0) may be made to indicate whether the last PSSCH/DMRS symbol should be dropped or not. IF CSI is triggered, CSI-RS may be mapped to the last symbol position of PSSCH and the last PSSCH/DMRS symbol is dropped. In some configurations, a DMRS is configured at the last symbol of PSSCH.

Alternately or in addition, PSSCH may be configured to always drop the last PSSCH/DMRS symbol regardless of a CSI request being set or not, and the CSI-RS may be mapped to the last symbol position. In some configurations, CSI requests may be configured in the second stage of SCI and DMRS channel estimation may be performed before decoding SCI 0-2. In this example, the CSI request may be used to dynamically control the mapping of the last symbol, which can advantageously reduce PSSCH demodulation complexity, and avoid potential collision with CSI-RS resource elements associated with other interlaces (e.g., 910, 920). In come configurations, the CSI request may be moved to SCI 0-1 and used to indicate whether or not the last PSSCH/DMRS is to be dropped or not. By moving the CSI request of PSCCH, the receiving UE may determine PSSCH and CSI-RS time allocation ahead of time and minimize PSSCH demodulation complications.

In some cases, a UE does not decode other UE's SCI before transmitting PSSCH and PSCCH, and thus may have no knowledge regarding whether CSI-RS associated with other interlaces is triggered or not. If CSI-RS is not triggered for a current interlace, instances where a CSI request in SCI 0-2 is used to indicate dropping the last PSSCH/DMRS or not as described above maximizes resource utilization by transmitting PSSCH/PSCCH in the potential CSI-RS symbol. Similarly, moving the CSI request to SCI 0-1 and using it to indicate whether or not to drop the last PSSCH/DMRS will have the same effect. However, there may be instances where a UE will need to handle CSI-RS from another UE that is present in the last PSSCH symbol when CSI-RS is not triggered.

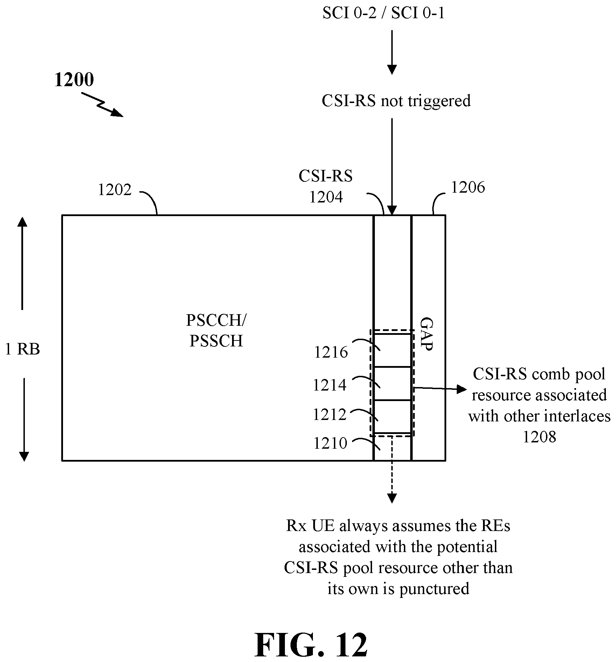

FIG. 12 is an illustration 1200 of a configuration for sidelink shared channel (PSSCH) collision handling under one example. Similar to the examples of FIGS. 10-11, FIG. 12 shows one RB (e.g., see 902) including PSCCH/PSSCH data 1202, CSI-RS 1204 and a gap resource element 1206 for a receiving UE. When PSSCH is transmitted at the potential CSI-RS symbol location if CSI-RS is not triggered, the receiving UE may assume that the REs associated with the potential CSI-RS pool resources other than its own is punctured. Thus, in one example, a CSI request in SCI 0-2 or SCI 0-1 may be transmitted to indicate whether or not the last PSSCH/DMRS symbol is to be dropped or not, where CSI-RS is not triggered. The comb pool resources 1210-1216 of CSI-RS 1204 may be configured as transmit/receive pairs where comb pool resources 1212-1216 represent three separate transmissions from three different, other, UEs and would collectively (shown in dotted line) be considered CSI-RS comb pool resources associated with other interlaces 1208. The receiving UE in this example would always assume that the REs associated with the potential CSI-RS pool resource other than its own (1208) is punctured. In this way, other UEs would not be able to trigger CSI-RS.

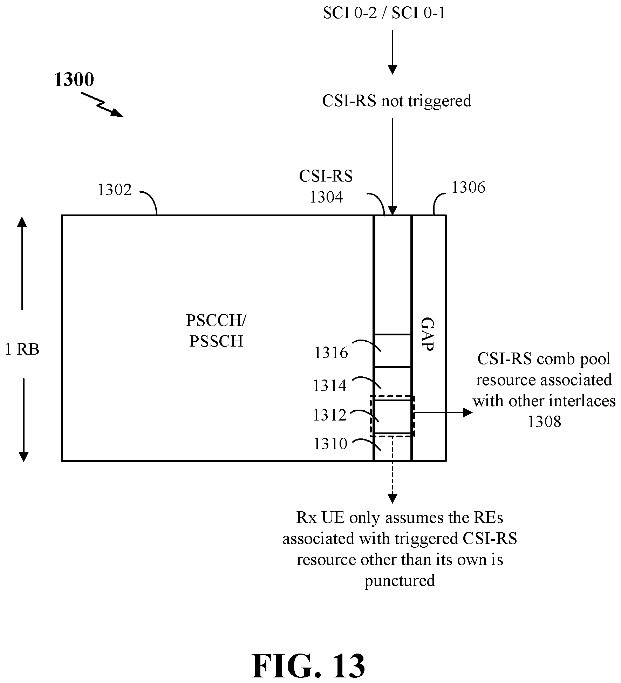

FIG. 13 is an illustration 1300 of a configuration for sidelink shared channel (PSSCH) collision handling under another example. Similar to FIG. 12, the figure shows one RB (e.g., see 902) including PSCCH/PSSCH data 1302, CSI-RS 1304 and a gap resource element 1306 for a receiving UE. In one example, a CSI request in SCI 0-2 or SCI 0-1 may be transmitted to indicate whether or not the last PSSCH/DMRS symbol is to be dropped or not, where CSI-RS is not triggered. The comb pool resources 1310-1316 of CSI-RS 1304 may be configured as transmit/receive pairs where comb pool resources 1312-1316 represent three separate transmissions from three different, other, UEs. In this example, the receiving UE may be configured to decode CSI-RS requests in all subchannels or interlaces before decoding data in the PSSCH. The receiving UE may need to decode SCI 0-2 in the interlace resource pool to determine if any of the CSI-RS is triggered, before decoding data in PSSCH. Here, the UE may assume the REs of the triggered CSI-RS is punctured in the last symbol while decoding the PSSCH. IN some instances, it may be advantageous to move the CSI request to SCI 0-1 in PSSCH, where the receiving UE can determine if the CSI-RS is triggered while decoding PSCCH, which is earlier compared to second stage SCI (SCI 0-2).

In some examples, CSI-RS resource pool association may be performed on interlace resources (e.g., 910, 920) with PSSCH resources. As CSI-RS signals may be provided as comb-12 waveforms, 12 or 6 resources in the CSI-RS resource pool may be defined with 12 or 6 comb offsets. With a one port configuration, 12 comb offsets would be available, while for a two port configuration, 6 comb offsets would be available. Accordingly, each interlace may be associated with a CSI-RS comb offset. For example, the x-th resource in an interlace pool may be associated with CSI-RS, resulting in a comb offset number x.

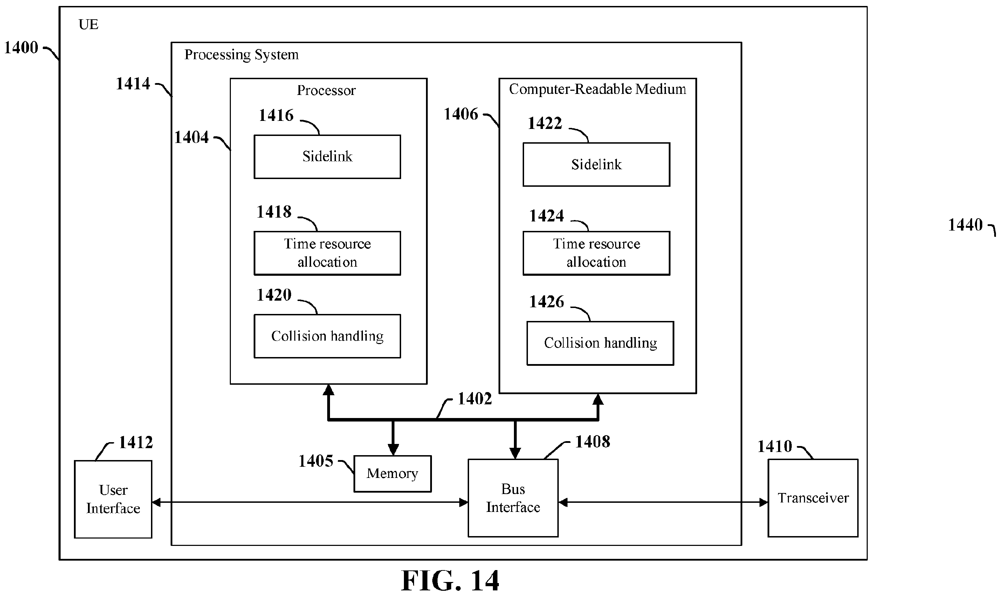

FIG. 14 is a block diagram illustrating an example of a hardware implementation for a UE 1400 employing a processing system 1414. For example, the UE 1400 may be a user equipment (UE) as illustrated in any one or more of FIGs. 1 and/or 2.

The UE 1400 may be implemented with a processing system 1414 (or "processing apparatus") that includes one or more processors 1404. Examples of processors 1404 include microprocessors, microcontrollers, digital signal processors (DSPs), field programmable gate arrays (FPGAs), programmable logic devices (PLDs), state machines, gated logic, discrete hardware circuits, and other suitable hardware configured to perform the various functionality described throughout this disclosure. In various examples, the UE 1400 may be configured to perform any one or more of the functions described herein, including, but not limited to, sidelink communication and processing. That is, the processor 1404. as utilized in the UE 1400, may be used to implement any one or more of the processes and procedures described herein.

**In** this example, the processing system 1414 may be implemented with a bus architecture, represented generally by the bus 1402. The bus 1402 may include any number of interconnecting buses and bridges depending on the specific application of the processing system 1414 and the overall design constraints. The bus 1402 communicatively couples together various circuits including one or more processors (represented generally by the processor 1404), a memory 805, and computer-readable media (represented generally by the computer-readable medium 1406). The bus 1402 may also link various other circuits such as timing sources, peripherals, voltage regulators, and power management circuits, which are well known in the art, and therefore, will not be described any further. A bus interface 1408 provides an interface between the bus 1402 and a transceiver 1410. The transceiver 1410 provides a communication interface or means for communicating with various other apparatus over a transmission medium. Depending upon the nature of the apparatus, a user interface 1412 (e.g., keypad, display, speaker, microphone, joystick) may also be provided. Of course, such a user interface 1412 is optional, and may be omitted in some examples, such as a base station.

**In** some aspects of the disclosure, the processor 1404 may include sidelink processing circuitry 1416 configured to implement, for example, communication and sidelink processing described herein, such as technologies and techniques described in FIGS. 4-8 above. Time resource allocation circuitry 1418 may be configured, for example, to implement time resource allocation, such as those described herein, and techniques described in FIGS. 8-11 above. Collision handling circuitry 1420 may be configured, for example, to implement collision handling, such as those described herein, and techniques described in FIGS. 8 and 12-13 above. The processor 1404 is responsible for managing the bus 1402 and general processing, including the execution of software stored on the computer-readable medium 1406. The software, when executed by the processor 1404, causes the processing system 1414 to perform the various functions described below for any particular apparatus. The computer-readable medium 1406 and the memory 1405 may also be used for storing data that is manipulated by the processor 1404 when executing software.

One or more processors 1404 in the processing system 1414 may execute software. Software shall be construed broadly to mean instructions, instruction sets, code, code segments, program code, programs, subprograms, software modules, applications, software applications, software packages, routines, subroutines, objects, executables, threads of execution, procedures, functions, etc., whether referred to as software, firmware, middleware, microcode, hardware description language, or otherwise. The software may reside on a computer-readable medium 1406. The computer-readable medium 1406 may be a non-transitory computer-readable medium. A non-transitory computer-readable medium includes, by way of example, a magnetic storage device (e.g., hard disk, floppy disk, magnetic strip), an optical disk (e.g., a compact disc (CD) or a digital versatile disc (DVD)), a smart card, a flash memory device (e.g., a card, a stick, or a key drive), a random access memory (RAM), a read only memory (ROM), a programmable ROM (PROM), an erasable PROM (EPROM), an electrically erasable PROM (EEPROM), a register, a removable disk, and any other suitable medium for storing software and/or instructions that may be accessed and read by a computer. The computer-readable medium 1406 may reside in the processing system 1414, external to the processing system 1414, or distributed across multiple entities including the processing system 1414. The computer-readable medium 1406 may be embodied in a computer program product. By way of example, a computer program product may include a computer-readable medium in packaging materials. Those skilled in the art will recognize how best to implement the described functionality presented throughout this disclosure depending on the particular application and the overall design constraints imposed on the overall system.

In one or more examples, the computer-readable storage medium 1406 may include sidelink instructions 1422 configured for various functions, including, but not limited to, sidelink processing associated with functions of sidelink processor 1416. The computer-readable storage medium 1406 may also include time resource allocation instructions 1424 configured for various functions, including, but not limited to, time resource allocation associated with the functions of time resource allocation circuitry 1418. The computer-readable storage medium 1406 may also include collision handling instructions 1426 configured for various functions, including, but not limited to, collision handling functions associated with collision handling circuitry 1420.

Of course, in the above examples, the circuitry included in the processor 1414 is merely provided as an example, and other means for carrying out the described functions may be included within various aspects of the present disclosure, including but not limited to the instructions stored in the computer-readable storage medium 1406, or any other suitable apparatus or means described in any one of the FIGS. 1-3, and utilizing, for example, the processes and/or algorithms described herein.

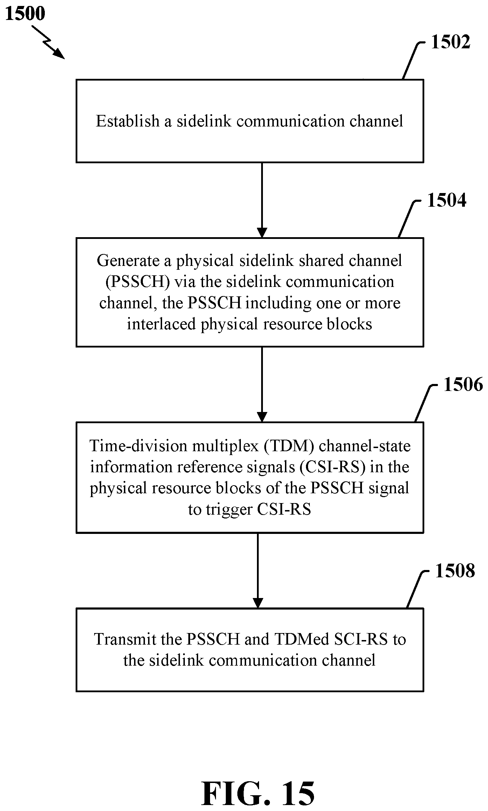

FIG. 15 is a process flow 1500 for sidelink data communication, using the technologies and techniques described above. In block 1502, a device, such as a UE, establishes a sidelink communication channel (e.g., with another UE). In block 1504, the device may generate a PSSCH (e.g., 1000, 1100) via the sidelink communication channel, where the PSSCH may include one or more interlaced physical resource blocks. In block 1506, the device may time-division multiplex (TDM) CSI-RS in one or more resource blocks in the physical resource blocks of the PSSCH signal to trigger CSI-RS. As discussed in greater detail above, The TDM CSI-RS may occupy one resource element or two contiguous resource elements in each of the one or more resource blocks. In block 1508, the device may transmit the PSSCH and TDMed SCI-RS to the sidelink communication channel. The CSI-RS may be mapped to a last symbol position of the PSSCH. The CSI-RS may be received as sidelink control information (SCI) in either a first stage (SCI 0-1) or second stage (SCI 0-2), where CSI-RS may be configured to indicate whether or not a last PSSCH symbol is to be dropped or not.

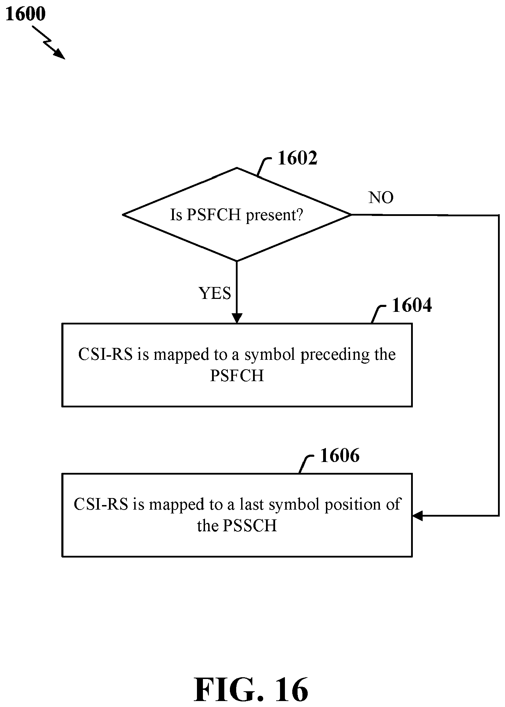

FIG. 16 is a process flow 1600 for sidelink data communication for the example of FIG. 15 with and without PSFCH. As explained above, the PSSCH may include or not include PSFCH. In decision block 1602, a determination is made whether or not the PSSCH includes PSFCH (see FIG. 10) or not (see FIG. 11). If PSFCH is present ("YES"), the CSI-RS is mapped to a symbol preceding the PSFCH. If not ("NO"), the CSI-RS is mapped to a last symbol position of the PSSCH.

Several aspects of a wireless communication network have been presented with reference to an exemplary implementation. As those skilled in the art will readily appreciate, various aspects described throughout this disclosure may be extended to other telecommunication systems, network architectures and communication standards.

By way of example, various aspects may be implemented within other systems defined by 3GPP, such as Long-Term Evolution (LTE), the Evolved Packet System (EPS), the Universal Mobile Telecommunication System (UMTS), and/or the Global System for Mobile (GSM). Various aspects may also be extended to systems defined by the 3rd Generation Partnership Project 2 (3GPP2), such as CDMA2000 and/or Evolution-Data Optimized (EV-DO). Other examples may be implemented within systems employing IEEE 802.11 (Wi-Fi), IEEE 802.16 (WiMAX), IEEE 802.20, Ultra-Wideband (UWB), Bluetooth, and/or other suitable systems. The actual telecommunication standard, network architecture, and/or communication standard employed will depend on the specific application and the overall design constraints imposed on the system.

Within the present disclosure, the word "exemplary" is used to mean "serving as an example, instance, or illustration." Any implementation or aspect described herein as "exemplary" is not necessarily to be construed as preferred or advantageous over other aspects of the disclosure. Likewise, the term "aspects" does not require that all aspects of the disclosure include the discussed feature, advantage or mode of operation. The term "coupled" is used herein to refer to the direct or indirect coupling between two objects. For example, if object A physically touches object B, and object B touches object C, then objects A and C may still be considered coupled to one another-even if they do not directly physically touch each other. For instance, a first object may be coupled to a second object even though the first object is never directly physically in contact with the second object. The terms "circuit" and "circuitry" are used broadly, and intended to include both hardware implementations of electrical devices and conductors that, when connected and configured, enable the performance of the functions described in the present disclosure, without limitation as to the type of electronic circuits, as well as software implementations of information and instructions that, when executed by a processor, enable the performance of the functions described in the present disclosure.

One or more of the components. steps, features and/or functions illustrated in FIGs. 1-16 may be rearranged and/or combined into a single component, step, feature or function or embodied in several components, steps, or functions. Additional elements, components, steps, and/or functions may also be added without departing from novel features disclosed herein. The apparatus, devices, and/or components illustrated in FIGs. 1-16 may be configured to perform one or more of the methods, features, or steps escribed herein. The novel algorithms described herein may also be efficiently implemented in software and/or embedded in hardware.

It is to be understood that the specific order or hierarchy of steps in the methods disclosed is an illustration of exemplary processes. Based upon design preferences, it is understood that the specific order or hierarchy of steps in the methods may be rearranged. The accompanying method claims present elements of the various steps in a sample order, and are not meant to be limited to the specific order or hierarchy presented unless specifically recited therein.

The previous description is provided to enable any person skilled in the art to practice the various aspects described herein. Various modifications to these aspects will be readily apparent to those skilled in the art, and the generic principles defined herein may be applied to other aspects. The invention is defined by the appended claims.

## Claims

1. A method (1500) for wireless communication performed by a user equipment, UE (106), comprising:
establishing (1502) a sidelink communication channel including receiving symbols of at least one physical sidelink shared channel, PSSCH, configured to an interlaced waveform;
receiving channel state information-reference signals, CSI-RS (904, 906), mapped over a plurality of interlaced PSSCH resource blocks (910, 912, 914, 920, 922, 924), wherein the CSI-RS are time division multiplexed with symbols of the mapped interlaced PSSCH resource blocks (910, 912, 914, 920, 922, 924);
processing the CSI-RS (904, 906) received over the plurality of interlaced PSSCH resource blocks (910, 912, 914, 920, 922, 924);
determining, from the processing, a channel quality of the sidelink channel from the portion of the plurality of interlaced PSSCH resource blocks (910, 912, 914, 920, 922, 924) comprising the mapped CSI-RS.

2. The method of claim 1, wherein the TDM CSI-RS occupies one resource element in each of the one or more resource blocks.

3. The method of claim 1, wherein the TDM CSI-RS occupies two contiguous resource elements in each of the one or more resource blocks.

4. The method of claim 1, wherein the PSSCH blocks comprises one or more physical sidelink feedback channel, PSFCH, blocks associated with the one or more interlaced physical resource blocks.

5. The method of claim 4, wherein the CSI-RS is mapped to a symbol preceding the PSFCH.

6. The method of claim 1, wherein the CSI-RS is mapped to a last symbol position of the PSSCH.

7. The method of claim 1, wherein the CSI-RS is configured as sidelink control information, SCI.

8. The method of claim 7, wherein the CSI-RS is configured in a second stage of SCI.

9. The method of claim 8, wherein the CSI-RS is configured to indicate whether or not a last PSSCH symbol is to be dropped or not.

10. The method of claim 7, where the CSI-RS is configured in a first stage of SCI.

11. The method of claim 10, wherein the CSI-RS is configured to indicate whether or not a last symbol of the PSSCH is to be dropped.

12. The method of claim 1, wherein, if CSI-RS is not triggered, the UE treats process resource elements associated with a potential pool of CSI-RS resources as being punctured.

13. The method of claim 1, further comprising decoding CSI-RS in all interlaces before decoding data in the PSSCH.

14. A user equipment, UE (106), for wireless communication, comprising:
at least one processor (1404); and
a memory (805) coupled to the at least one processor, the at least one processor and the memory configured to:
establish a sidelink communication channel including receiving symbols of at least one physical sidelink shared channel, PSSCH, configured to an interlaced waveform;
receive channel state information-reference signals, CSI-RS, mapped over a plurality of interlaced PSSCH resource blocks (910, 912, 914, 920, 922, 924), wherein the CSI-RS (904, 906) are time-division multiplexed with the mapped interlaced PSSCH resource blocks (910, 912, 914, 920, 922, 924);
process the CSI-RS (904, 906) received over the plurality of interlaced PSSCH resource blocks (910, 912, 914, 920, 922, 924);
determine from the processing a channel quality of the sidelink channel from the portion of the plurality of interlaced PSSCH resource blocks (910, 912, 914, 920, 922, 924) comprising the mapped CSI-RS.

15. A non-transitory computer-readable medium storing computer-executable code which, when executed by a computer, cause the computer to carry out the method of any one of claims 1 to 13.

## Patentansprüche

1. Ein Verfahren (1500) für eine drahtlose Kommunikation, das durch ein Benutzergerät (User Equipment bzw. UE) (106) durchgeführt wird, aufweisend:
Herstellen (1502) eines Sidelink-Kommunikationskanals einschließlich des Empfangens von Symbolen wenigstens eines gemeinsamen physikalischen Sidelink-Kanals (PSSCH), der für eine verschachtelte Wellenform konfiguriert ist,
Empfangen von Kanalzustandsinformationen-Referenzsignalen (Channel State Information-Reference Signals bzw. CSI-RS) (904, 906), die über eine Vielzahl von verschachtelten PSSCH-Ressourcenblöcken (910, 912, 914, 920, 922, 924) gemappt sind, wobei die CSI-RS mit Symbolen der gemappten verschachtelten PSSCH-Ressourcenblöcke (910, 912, 914, 920, 922, 924) zeitgemultiplext sind,
Verarbeiten der CSI-RS (904, 906), die über die Vielzahl von verschachtelten PSSCH-Ressourcenblöcken (910, 912, 914, 920, 922, 924) empfangen werden,
Bestimmen, aus der Verarbeitung, einer Kanalqualität des Sidelink-Kanals aus dem Teil der Vielzahl von verschachtelten PSSCH-Ressourcenblöcken (910, 912, 914, 920, 922, 924) einschließlich der gemappten CSI-RS.

2. Verfahren nach Anspruch 1, wobei die zeitgemultiplexten CSI-RS ein Ressourcenelement in jedem des einen oder der mehreren Ressourcenblöcke einnehmen.

3. Verfahren nach Anspruch 1, wobei die zeitgemultiplexten CSI-RS zwei aufeinander folgende Ressourcenelemente in jedem des einen oder der mehreren Ressourcenblöcke einnehmen.

4. Verfahren nach Anspruch 1, wobei die PSSCH-Blöcke einen oder mehrere physikalische Sidelink-Rückmeldungs- bzw. Feedbackkanal (PSFCH)-Blöcke, die mit dem einen oder den mehreren verschachtelten physikalischen Ressourcenblöcken assoziiert sind, umfassen.

5. Verfahren nach Anspruch 4, wobei die CSI-RS auf ein dem PSFCH vorangehendes Symbol gemappt sind.

6. Verfahren nach Anspruch 1, wobei die CSI-RS auf wenigstens eine Symbolposition des PSSCH gemappt sind.

7. Verfahren nach Anspruch 1, wobei die CSI-RS als Sidelink-Steuerinformationen (Sidelink Control Information bzw. SCI) konfiguriert sind.

8. Verfahren nach Anspruch 7, wobei die CSI-RS in einer zweiten Stufe der SCI konfiguriert sind.

9. Verfahren nach Anspruch 8, wobei die CSI-RS konfiguriert sind, um anzugeben, ob ein letztes PSSCH-Symbol fallengelassen werden soll oder nicht.

10. Verfahren nach Anspruch 7, wobei die CSI-RS in einer ersten Stufe der SCI konfiguriert sind.

11. Verfahren nach Anspruch 10, wobei die CSI-RS konfiguriert sind, um anzugeben, ob ein letztes Symbol des PSSCH fallengelassen werden soll oder nicht.

12. Verfahren nach Anspruch 1, wobei, wenn die CSI-RS nicht ausgelöst werden, das UE Prozessressourcenelemente, die mit einem potentiellen Pool von CSI-RS-Ressourcen assoziiert sind, als punktiert behandelt.

13. Verfahren nach Anspruch 1, das weiterhin das Decodieren von CSI-RS in allen Verschachtelungen vor dem Decodieren von Daten in dem PSSCH aufweist.

14. Ein Benutzergerät (User Equipment bzw. UE) (106) für eine drahtlose Kommunikation, aufweisend:
wenigstens einen Prozessor (1404), und
einen Speicher (805), der mit dem wenigstens einen Prozessor gekoppelt ist, wobei der wenigstens eine Prozessor und der Speicher konfiguriert sind zum:
Herstellen eines Sidelink-Kommunikationskanals einschließlich des Empfangens von Symbolen wenigstens eines gemeinsamen physikalischen Sidelink-Kanals (PSSCH), der für eine verschachtelte Wellenform konfiguriert ist,
Empfangen von Kanalzustandsinformationen-Referenzsignalen (Channel State Information-Reference Signals bzw. CSI-RS), die über eine Vielzahl von verschachtelten PSSCH-Ressourcenblöcken (910, 912, 914, 920, 922, 924) gemappt sind, wobei die CSI-RS (904, 906) mit den gemappten verschachtelten PSSCH-Ressourcenblöcken (910, 912, 914, 920, 922, 924) zeitgemultiplext sind,
Verarbeiten der CSI-RS (904, 906), die über die Vielzahl von verschachtelten PSSCH-Ressourcenblöcken (910, 912, 914, 920, 922, 924) empfangen werden,
Bestimmen, aus der Verarbeitung, einer Kanalqualität des Sidelink-Kanals aus dem Teil der Vielzahl von verschachtelten PSSCH-Ressourcenblöcken (910, 912, 914, 920, 922, 924) einschließlich der gemappten CSI-RS.

15. Ein nicht-transitorisches, computerlesbares Medium, das einen computerausführbaren Code speichert, der bei einer Ausführung durch einen Computer den Computer zum Ausführen des Verfahrens eines der Ansprüche 1 bis 13 veranlasst.

## Revendications

1. Procédé (1500) de communication sans fil réalisé par un équipement d'utilisateur, UE, (106), comprenant les étapes consistant à :
établir (1502) un canal de communication en liaison latérale, ce qui comprend l'étape consistant à recevoir des symboles d'au moins un canal physique partagé en liaison latérale, PSSCH, configuré en une forme d'onde entrelacée ;
recevoir des signaux de référence d'informations d'état de canal, CSI-RS, (904, 906), mis en correspondance sur une pluralité de blocs de ressources PSSCH entrelacés (910, 912, 914, 920, 922, 924), les CSI-RS étant multiplexés par répartition dans le temps avec des symboles des blocs de ressources PSSCH entrelacés (910, 912, 914, 920, 922, 924) mis en correspondance ;
traiter les CSI-RS (904, 906) reçus sur la pluralité de blocs de ressources PSSCH entrelacés (910, 912, 914, 920, 922, 924) ;
déterminer, à partir du traitement, une qualité de canal du canal en liaison latérale à partir de la partie de la pluralité de blocs de ressources PSSCH entrelacés (910, 912, 914, 920, 922, 924) comprenant les CSI-RS mis en correspondance.

2. Procédé selon la revendication 1, les CSI-RS TDM occupant un élément de ressource dans chacun des un ou plusieurs blocs de ressources.

3. Procédé selon la revendication 1, les CSI-RS TDM occupant deux éléments de ressource contigus dans chacun des un ou plusieurs blocs de ressources.

4. Procédé selon la revendication 1, les blocs PSSCH comprenant un ou plusieurs blocs de canal physique de retour en liaison latérale, PSFCH, associés aux un ou plusieurs blocs de ressources physiques entrelacés.

5. Procédé selon la revendication 4, les CSI-RS étant mis en correspondance avec un symbole précédant le PSFCH.

6. Procédé selon la revendication 1, les CSI-RS étant mis en correspondance avec une dernière position de symbole du PSSCH.

7. Procédé selon la revendication 1, les CSI-RS étant configurés sous la forme d'informations de commande en liaison descendante, SCI.

8. Procédé selon la revendication 7, les CSI-RS étant configurés dans un second étage des SCI.

9. Procédé selon la revendication 8, les CSI-RS étant configurés pour indiquer si un dernier symbole PSSCH doit être ignoré ou non.

10. Procédé selon la revendication 7, les CSI-RS étant configurés dans un premier étage des SCI.

11. Procédé selon la revendication 10, les CSI-RS étant configurés pour indiquer si un dernier symbole du PSSCH doit être ignoré ou non.

12. Procédé selon la revendication 1, si un CSI-RS n'est pas déclenché, l'UE traitant les éléments de ressources de processus associés à un groupe potentiel de ressources CSI-RS comme étant ponctionnés.

13. Procédé selon la revendication 1, comprenant en outre l'étape consistant à décoder les CSI-RS dans tous les entrelacements avant le décodage de données dans le PSSCH.

14. Équipement d'utilisateur, UE, (106) de communication sans fil, comprenant :
au moins un processeur (1404) ; et
une mémoire (805) couplée à l'au moins un processeur, l'au moins un processeur et la mémoire étant configurés pour :
établir un canal de communication en liaison latérale, ce qui comprend la réception de symboles d'au moins un canal physique partagé en liaison latérale, PSSCH, configuré en une forme d'onde entrelacée ;
recevoir des signaux de référence d'informations d'état de canal, CSI-RS, mis en correspondance sur une pluralité de blocs de ressources PSSCH entrelacés (910, 912, 914, 920, 922, 924), les CSI-RS (904, 906) étant multiplexés par répartition dans le temps avec les blocs de ressources PSSCH entrelacés (910, 912, 914, 920, 922, 924) mis en correspondance ;
traiter les CSI-RS (904, 906) reçus sur la pluralité de blocs de ressources PSSCH entrelacés (910, 912, 914, 920, 922, 924) ;
déterminer, à partir du traitement, une qualité de canal du canal en liaison latérale à partir de la partie de la pluralité de blocs de ressources PSSCH entrelacés (910, 912, 914, 920, 922, 924) comprenant les CSI-RS mis en correspondance.

15. Support non transitoire et lisible par ordinateur, stockant un code exécutable par ordinateur qui, lorsqu'il est exécuté par un ordinateur, amène l'ordinateur à mettre en œuvre le procédé selon l'une quelconque des revendications 1 à 13.
